# EUROPÄISCHE PATENTSCHRIFT

(11) **EP 2 584 894 B1**
(45) Veröffentlichungstag und Bekanntmachung des Hinweises auf die Patenterteilung: **01.06.2016**
(21) Anmeldenummer: 11726796.3
(22) Anmeldetag: 22.06.2011
(51) Int. Cl.: A01N 25/04, A01N 37/02, A01P 13/00, A01N 25/30

(54) **PELARGONSÄURE-FORMULIERUNG**
PELARGONIC ACID FORMULATION
FORMULATION D'ACIDE PÉLARGONIQUE

(30) Priorität: 30.12.2010 EP 10197414; 24.06.2010 EP 10167225
(43) Veröffentlichungstag der Anmeldung: 01.05.2013
(73) Patentinhaber: COMPO GmbH, 48157 Münster (DE)
(72) Erfinder: SCHWEINSBERG, Otto, 55494 Rheinböllen (DE); ZIEGLER, Arthur, 55566 Kirschroth (DE)
(74) Vertreter: Reitstötter Kinzebach
(86) Internationale Anmeldenummer: PCT/EP2011/060391
(87) Internationale Veröffentlichungsnummer: WO 2011/161133

(56) Entgegenhaltungen:
- WO-A1-00/16620
- WO-A1-91/05472
- WO-A1-97/03560
- WO-A1-2004/068948
- COLEMAN R ET AL: "Organic acid enhancement of pelargonic acid", 1. März 2008 (2008-03-01), WEED TECHNOLOGY, CHAMPAIGN, IL, US LNKD- DOI:10.1614/WT-06-195.1, PAGE(S) 38 - 41, XP002598243, ISSN: 0890-037X Seite 39; Tabelle 2 Seite 40, Spalte 2, Zeile 22 - Zeile 25
- ANONYMOUS: 'Finalsan Unkrautfrei Neudorff Sicherheitsdatenblatt', [Online] 01 Januar 2007, Seiten 1 - 6, XP055180701 Gefunden im Internet: <URL:http://www.i-m.de/gefahrstoffe/235590. pdf> [gefunden am 2015-04-01]

## Beschreibung

Die vorliegende Erfindung betrifft eine Pelargonsäure-Formulierung in Form einer Öl-in-Wasser-Emulsion und deren Verwendung zur Bekämpfung von unerwünschtem Pflanzenwuchs.

In der Landwirtschaft, im Gewerbe und im Haushalt werden eine Vielzahl verschiedener Herbizide verwendet, um unerwünschte Unkräuter und andere Pflanzen zu bekämpfen. Dabei sind solche auf Basis synthetischer Wirkstoffe traditionell die wirksamsten und am häufigsten verwendeten Herbizide. Problematisch ist die in der Regel geringe Umweltverträglichkeit dieser hochwirksamen Herbizide. So zeichnen sie sich häufig durch eine schlechte biologische Abbaubarkeit und/oder eine hohe Toxizität gegenüber Menschen und Tieren aus und führen häufig zu Resistenzen bei den Unkräutern. Gerade für Anwendung im Haushalt machen diese Eigenschaften derartige Herbizide ungeeignet, da sie dort nicht von Fachleuten, sondern von ungeschulten Personen eingesetzt werden.

Herbizide oder andere Pestizide aus natürlich vorkommenden Wirkstoffen wie Fettsäuren oder Fettsäuresalzen weisen häufig eine deutlich bessere Bioabbaubarkeit gegenüber Verbindungen auf Basis synthetischer Wirkstoffe auf. Auch ist die Toxizität solcher Herbizide gegenüber Menschen, Tieren und dem Naturhaushalt geringer. Diese Vorteile gehen aber in der Regel mit einer kürzeren Wirkungsdauer einher.

In jüngerer Zeit wurden verschiedentlich herbizide Formulierungen auf Basis von Salzen aliphatischer Carbonsäuren mit 8 bis 12 C-Atomen beschrieben.

So sind aus der WO 91/05471 wässrige Formulierungen herbizider Fettsäuren bekannt, die größere Mengen an Emulgatoren enthalten. Auf diese Weise lassen sich nur vergleichsweise geringe Konzentrationen an Pelargonsäure stabil formulieren. Aus der WO 91/05471 sind ebenfalls nicht-wässrige Konzentrate bekannt, die im Wesentlichen aus dieser herbiziden Fettsäure und dem Emulgator bestehen. Derartige Formulierungen sind jedoch stark reizend für Haut und Augen. Die Verdünnungsstabilität ist nicht zufriedenstellend.

Aus der WO 91/05472 sind nicht-wässrige Formulierungen bekannt, die aus einer herbiziden Fettsäure, einer oberflächenaktiven Substanz und einem Öl-Bestandteil aus der Gruppe der Triglyceride, Terpenoide und paraffinischer Mineralöle bestehen. Nachteilig ist auch hier die stark reizende Wirkung, da die Carbonsäuren nicht in neutralisierter Form vorliegen. Zudem ist die Verdünnungsstabilität nicht zufriedenstellend.

Aus der GB 2247621 wiederum sind wässrige Formulierungen herbizider Fettsäuren bekannt, welche die Fettsäuren in teilneutralisierter Form enthalten. Die Formulierungen umfassen als Co-Solvens einen flüchtigen Alkohol, der beim Anwenden der Formulierung verdampft. Dieses ist aus Gründen des Arbeitsschutzes von Nachteil.

Die WO 93/09669 beschreibt wässrige Formulierungen von Organoammoniumsalzen herbizider Fettsäuren wie beispielsweise das Isopropylammoniumsalz, Tryptaminsalz, n-Amylaminsalz, n-Hexylaminsalz oder sek.-Butylaminsalz der Pelargonsäure. Diese Salze weisen eine herbizide Wirkung auf, die angeblich mit der der freien Pelargonsäure vergleichbar ist. Von Nachteil ist der Geruch derartiger Formulierungen, speziell bei Alkylamin-Salzen von Alkylaminen mit geringem Molekulargewicht. Alkylamin-Salze mit einem hydrophoben Alkylrest, d. h. einem Alkyl-Rest mit höherem Molekulargewicht, wiederum sind toxikologisch problematisch und sind in der Regel biologisch unzureichend abbaubar

Die EP 0868849 beschreibt eine Herbizidformulierung, welche als wirksamen Bestandteil ein teilverseiftes Ammoniumsalz einer Fettsäure, d. h. ein Gemisch der Fettsäure mit dem jeweiligen Fettsäureammoniumsalz, enthält. Diese Zusammensetzung ist wirksam gegen Algen, Leberblümchen, Moose und höhere Pflanzen und führt angeblich zu einer verringerten Bildung von Verschmutzungen auf damit behandelten Stein- oder Betonoberflächen. Bei diesen Formulierungen geht die verringerte Bildung von Verschmutzungen gemessen an dem Verschmutzungsgrad vor Reinigungsarbeiten und/oder Witterungseinflüssen mit einer verringerten herbiziden Wirksamkeit der Formulierung einher. Die Zusammensetzung weist auch bei höheren Aufwandmengen daher gegen eine Reihe von Schadpflanzen nur eine unzufriedenstellend geringe Aktivität auf.

Die EP 1589817 beschreibt eine Herbizidformulierung, die Essigsäure und Glycin in verschiedenen Gewichtsverhältnissen umfasst. Das Glycin verstärkt die herbizide Aktivität der Essigsäure, ist ungiftig und nichtreizend für den menschlichen Körper. Die Formulierung hat jedoch aufgrund der darin enthaltenen Essigsäure einen intensiven und unangenehmen Eigengeruch. Aufgrund der starken Reizwirkung der Essigsäure hat das Produkt ein erhebliches Reizpotential auf die Haut, Schleimhäute und insbesondere Augen. Zudem ist die herbizide Wirkung derartiger Formulierungen, insbesondere gegen ältere Pflanzen gering. Die Aufwandmengen solcher Formulierungen sind vergleichsweise hoch, was zu wesentlich höheren Verpackungs-, Logistik- und Transportkosten führt.

WO 97/03560 und WO 00/16620 beschreiben die Verwendung von C₈-C₂₂-Sarkosinaten, also oberflächenaktiven Substanzen, als Adjuvans für Fluazifop-butyl (WO 97/03560) bzw. als Adjuvans für Glufosinate (WO 00/16620). In beiden Fällen wird eine verdünnte wässrige Lösung des Adjuvans mit dem jeweiligen Herbizid kombiniert. Diese Kombination erfolgt erst unmittelbar vor der Anwendung. In beiden Fällen wird keine Pelargonsäure Formulierung offenbart.

Zusammenfassend ist festzustellen, dass die bislang bekannten Formulierungen herbizider Fettsäuren eine Reihe von Nachteilen aufweisen, wie beispielsweise eine hohe Reizwirkung gegenüber menschlichem oder tierischem Gewebe, ein unangenehmer Geruch, mehr oder weniger ausgeprägte Fleckenbildung durch Rückstände, eine nur mäßige Verdünnungsstabilität, d. h. die Formulierungen neigen beim Verdünnen mit Wasser zur Phasentrennung, oder eine geringe herbizide Wirkung.

Der vorliegenden Erfindung liegt die Aufgabe zu Grunde, herbizide Wirkstoffformulierungen zur Verfügung zu stellen, die für Mensch und Tier ungiftig sind, eine gute Umweltverträglichkeit und eine gute biologische Abbaubarkeit besitzen, keine sichtbaren Rückstände nach der Anwendung zu hinterlassen, nicht streng riechen oder reizend sind und eine hohe Wirksamkeit als Totalherbizid, insbesondere gegen Algen, Moose und Unkräuter, aufweisen. Zudem sollen die Formulierungen gute Formulierungseigenschaften aufweisen, wie beispielsweise eine hohe Stabilität gegenüber einer Phasentrennung bei Lagerung und eine hohe Verdünnungsstabilität.

Es wurde überraschender Weise gefunden, dass diese und weitere Aufgaben durch die im Folgenden definierte Pelargonsäure-Formulierung gelöst werden.

Dementsprechend betrifft die vorliegende Erfindung herbizide PelargonsäureFormulierungen in Form von Öl-in-Wasser-Emulsionen, enthaltend:
a) Pelargonsäure oder ein Gemisch aliphatischer C₆-C₁₀-Carbonsäuren mit einem Pelargonsäureanteil von wenigstens 80 Gew.-%, bezogen auf das Gesamtgewicht des Gemischs, als Komponente A;
b) wenigstens ein organisches Lösungsmittel als Komponente B, das unter Standardbedingungen eine Wasserlöslichkeit unterhalb 1 g/l und bei Standarddruck einen Siedepunkt oberhalb 130 °C aufweist, ausgewählt unter C₁-C₁₆-Alkyl-C₆-C₂₂-alkancarbonsäureestern, C₃-C₁₀-Alkandicarbonsäuredi-C₁-C₁₆-dialkylestern und deren Gemischen;
c) wenigstens eine oberflächenaktive Substanz oder ein Salz davon als Komponente C, die ausgewählt ist unter Verbindungen der Formel 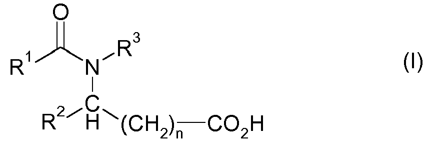 worin
   n für 0 oder 1 steht,
   R¹ für einen linearen oder verzweigten C₆-C₂₂-Alkylrest oder für einen linearen oder verzweigten C₆-C₂₂-Alkenylrest steht und
   R² und R³ unabhängig voneinander für Wasserstoff oder eine C₁-C₄-Alkylgruppe stehen;
d) wenigstens ein nichtionisches Tensid als Komponente D, das ausgewählt ist unter Substanzen, die wenigstens eine Poly-C₂-C₄-oxyalkylen-Gruppe aufweisen;
e) wenigstens eine Aminosäure als Komponente E mit einem isoelektrischen Punkt im Bereich von 5 bis 7 und
f) Wasser.

Gegenstand der Erfindung ist außerdem die Verwendung der erfindungsgemäßen Pelargonsäure-Formulierungen zur Bekämpfung von unerwünschtem Pflanzenwuchs.

Werden keine anderen Angaben gemacht, so gelten im Rahmen der vorliegenden Erfindung für die verwendeten Begriffe die folgenden allgemeinen Definitionen:
Der Ausdruck Cₙ-Cₘ gibt in Bezug auf die damit bezeichneten Reste die mögliche Anzahl an Kohlenstoffatome dieser Reste an.

"C₁-C₄-Alkyl" steht für einen linearen oder verzweigten Alkylrest mit 1 bis 4 Kohlenstoffatomen. Dies sind Methyl, Ethyl, n-Propyl, iso-Propyl, n-Butyl, 2-Butyl, iso-Butyl und tert-Butyl.

C₁-C₁₆-Alkyl-steht für einen linearen oder verzweigten Alkylrest mit 1 bis 16 C-Atomen, z. B. für "C₁-C₄-Alkyl" wie zuvor genannt oder für C₅-C₁₆-Alkyl wie 1-Pentyl, 2-Pentyl, 3-Pentyl, 2-Methylbutyl, 3-Methylbutyl, Hexyl, Heptyl, Octyl, 2-Ethylhexyl, Nonyl, Decyl, 2-Propylheptyl, Undecyl, iso-Undecyl, Dodecyl, Tridecyl, iso-Tridecyl, Tetradecyl, Pentadecyl oder Cetyl.

"C₆-C₂₂-Alkyl" steht für einen linearen oder verzweigten Alkylrest mit 6 bis 22 Kohlenstoffatomen. Dies sind unter anderem Hexyl, Heptyl, Octyl, 2-Ethylhexyl, Nonyl, Decyl, 2-Propylheptyl, Undecyl, iso-Undecyl, Dodecyl, Tridecyl, iso-Tridecyl, Tetradecyl, Pentadecyl, Cetyl, Heptadecyl, Octadecyl, Nonadecyl, Eicosyl, Henicosyl und Docosyl.

"C₆-C₂₂-Alkenyl" steht für einen linearen oder verzweigten, ein oder mehrfach, z. B. 1- oder 2-fach ethylenisch ungesättigten Alkenylrest mit 6 bis 22 Kohlenstoffatomen. Dies sind unter anderem Hexenyl, Heptenyl, Octenyl, Ethylhexenyl, Nonenyl, Decenyl, Undecenyl, Dodecenyl, Tridecenyl, Tetradecenyl, Pentdecenyl, Cetenyl, Heptadecenyl, Octadecenyl, Nonadecenyl, Eicosenyl, Henicosenyl und Docosenyl.

Die erfindungsgemäßen Formulierungen enthalten als Komponente A Pelargonsäure oder ein Gemisch aliphatischer Carbonsäuren mit 6 bis 10 Kohlenstoffatomen mit einem Pelargonsäureanteil von wenigstens 80 Gew.-%, insbesondere wenigstens 90 Gew.-% bezogen auf das Gesamtgewicht des Gemisches. Weitere aliphatische Carbonsäuren, die neben Pelargonsäure in diesem Gemisch enthalten sein können, sind z. B. Capronsäure, Oenanthsäure, Caprylsäure und Caprinsäure. Als Komponente A sind neben reiner Pelargonsäure Gemische der vorgenannten linearen aliphatischen Carbonsäuren bevorzugt, deren Pelargonsäuregehalt wenigstens 90 Gew.-%, bezogen auf das Gemisch, beträgt. Insbesondere bevorzugt sind Pelargonsäure sowie Gemische der Pelargonsäure mit Caprylsäure.

In einer bevorzugten Ausführungsform enthält die Formulierung im Wesentlichen keine von der Komponente A verschiedenen herbiziden Wirkstoffe. "Im Wesentlichen keine" bedeutet in diesem Zusammenhang weniger als 0,1 Gew.-%, bezogen auf das Gesamtgewicht der Formulierung.

Als Komponente B enthalten die erfindungsgemäßen Formulierungen wenigstens ein organisches Lösungsmittel, welches einen Siedepunkt über 130 °C aufweist. Hierzu zählen Kohlenwasserstoffe wie z. B. Parafine, Öle wie z. B. Pflanzenöle, Alkandicarbonsäuredialkylester, insbesondere C₃-C₁₀-Alkandicarbonsäuredi-C₁-C₁₆-dialkylester und Alkancarbonsäurealkylester, insbesondere C₁-C₁₆-Alkyl-C₆-C₂₂-alkancarbonsäureester, wobei die beiden zuletzt genannten Substanzklassen und deren Gemische als Komponente B erfindungsgemäß sind. Insbesondere besteht die Komponente B zu wenigstens 90 Gew.-%, bevorzugt zu wenigstens 99 Gew.-%, bezogen auf das Gesamtgewicht der Komponente B, aus C₁-C₁₆-Alkyl-C₆-C₂₂-alkancarbonsäureestern oder C₃-C₁₀-Alkandicarbonsäuredi-C₁-C₁₆-dialkylestern oder Gemischen davon. Beispiele für erfindungsgemäß geeignete C₁-C₁₆-Alkyl-C₆-C₂₂-alkancarbonsäureester sind insbesondere die Ester der Octansäure (Caprylsäure), der Decansäure (Caprinsäure), der Dodecansäure (Laurinsäure), der Tetradecansäure (Myristinsäure), der Hexadecansäure (Palmitinsäure), der Octadecansäure (Stearinsäure), der Eicosansäure (Arachinsäure) und der Docosansäure (Behensäure), wie z. B. Octansäuremethylester, Octansäureisopropylester, Octansäure-tert.-butylester, Octansäure-2-ethylhexylester, Octansäureoctylester, Octansäuredodecylester, Octansäurehexadecylester, Decansäuremethylester, Decansäureisopropylester, Decansäuretert.-butylester, Decansäure-2-ethylhexylester, Decansäureoctylester, Decansäuredodecylester, Decansäurehexadecylester, Dodecansäuremethyleste, Dodecansäureisopropylester, Dodecansäure-tert.-butylester, Dodecansäure-2-ethylhexylester, Dodecansäureoctylester, Dodecansäuredodecylester, Dodecansäurehexadecylester, Tetradecansäuremethylester, Tetradecansäureisopropylester, Tetradecansäure-tert.-butylester, Tetradecansäure-2-ethylhexylester, Tetradecansäureoctylester, Tetradecansäuredodecylester, Tetradecansäurehexadecylester, Hexadecansäuremethylester, Hexadecansäureisopropylester, Hexadecansäure-tert.-butylester, Hexadecansäure-2-ethylhexylester, Hexadecansäureoctylester, Hexadecansäuredodecylester, Hexadecansäurehexadecylester, Octadecansäuremethylester, Octadecansäureisopropylester, Octadecansäure-tert.-butylester, Octadecansäure-2-ethylhexylester, Octadecansäureoctylester, Octadecansäuredodecylester, Octadecansäurehexadecylester, Eicosansäuremethylester, Eicosansäureisopropylester, Eicosansäure-tert.-butylester, Eicosansäure-2-ethylhexylester, Eicosansäureoctylester, Eicosansäuredodecylester, Eicosansäurehexadecylester, Docosansäureisopropylester, Docosansäure-tert.-butylester, Docosansäure-2-ethylhexylester, Docosansäureoctylester, Docosansäuredodecylester und Docosansäurehexadecylester. Besonders bevorzugt als Komponente B sind C₁-C₁₂-Alkyl-C₁₀-C₂₂-alkancarbonsäureestern, wie beispielsweise Octadecansäuremethylester, Dodecansäureisopropylester, Tetradecansäureisopropylester, Hexadecansäureisopropylester, Octadecansäureisopropylester, Tetradecansäure-2-ethylhexylester, Tetradecansäureoctylester, Hexadecansäure-2-ethylhexylester, Hexadecansäureoctylester, Octadecansäureoctylester, Octadecansäure-2-ethylhexylester sowie deren Gemische. Beispiele für erfindungsgemäß geeignete C₃-C₁₀-Alkandicarbonsäuredi-C₁-C₁₆-dialkylester sind insbesondere die Ester der Butandisäure (Bernsteinsäure), der Pentandisäure (Glutarsäure), der Hexandisäure (Adipinsäure) wie z. B. Butandisäuredibutylester, Butandisäurediisopropylester, Butandisäuredihexylester, Butandisäure-di-2-ethylhexylester, Butandisäure-di-2-octylester, Pentandisäure-dibutylester, Pentandisäuredüsopropylester, Pentandisäuredihexylester, Pentandisäure-di-2-ethylhexylester, Pentandisäure-di-2-octylester, Hexandisäure-dibutylester, Hexandisäure-dihexylester, Hexandisäure-dioctylester, Hexandisäure-di-2-ethylhexylester und Hexandisäure-di-isopropylester.

In bevorzugten Ausführungsformen erfindungsgemäßer Formulierungen umfasst die Komponente B wenigstens einen oder mehrere C₆-C₁₂-Alkyl-C₁₀-C₂₂-alkancarbonsäureester als Komponenten B1 wie z. B. Decansäure-2-ethylhexylester, Decansäureoctylester, Decansäuredecylester, Decansäuredodecylester, Dodecansäure-2-ethylhexylester, Dodecansäureoctylester, Dodecansäuredecylester, Dodecansäuredodecylester, Tetradecansäure-2-ethylhexylester, Tetradecansäureoctylester, Tetradecansäuredecylester, Tetradecansäuredodecylester, Hexadecansäure-2-ethylhexylester, Hexadecansäureoctylester, Hexadecansäuredecylester Hexadecansäuredodecylester, Octadecansäure-2-ethylhexylester, Octadecansäureoctylester, Octadecansäuredecylester, Octadecansäuredodecylester, Eicosansäure-2-ethylhexylester, Eicosansäureoctylester, Eicosansäuredodecylester, Eicosansäurehexadecylester,Docosansäure-2-ethylhexylester, Docosansäureoctylester, Docosansäuredecylester und Docosansäuredodecylester. Besonders bevorzugt als Komponente B1 sind die vorgenannten 2-Ethylhexylester wie Octadecansäure-2-ethylhexylester.

Weiterhin kann in bevorzugten Ausführungsformen erfindungsgemäßer Formulierungen die Komponente B als zusätzlichen Bestandteil B2 wenigstens einen oder mehrere C₁-C₄-Alkyl-C₆-C₁₈-alkancarbonsäureester wie Octansäuremethylester, Octansäureethylester, Octansäure-n-propylester, Octansäureisopropylester, Octansäure-n-butylester, Octansäure-tert.-butylester, Decansäuremethylester, Decansäureethylester, Decansäure-n-propylester, Decansäureisopropylester, Decansäure-n-butylester, Decansäure-tert.-butylester, Dodecansäuremethylester, Dodecansäureethylester, Dodecansäure-n-propylester, Dodecansäureisopropylester, Dodecansäure-n-butylester, Dodecansäure-tert.-butylester, Tetradecansäuremethylester, Tetradecansäureethylester, Tetradecansäure-n-propylester, Tetradecansäureisopropylester, Tetradecansäure-n-butylester, Tetradecansäure-tert.-butylester, Hexadecansäuremethylester, Hexandecansäureethylester, Hexandecansäure-n-propylester, Hexadecansäureisopropylester, Hexandecansäure-n-butylester, Hexadecansäure-tert.-butylester, Octadecansäuremethylester, Octadecansäureethylester, Octadecansäure-n-propylester, Octadecansäureisopropylester, Octadecansäure-n-butylester und Octadecansäure-tert.-butylester, umfassen. Besonders bevorzugt als B2 sind die Isopropylester der vorgenannten C₆-C₁₈-Alkancarbonsäuren. Insbesondere bevorzugt sind Tetradecansäureisopropylester, Hexadecansäureisopropylester und deren Gemische als Bestandteil B2.

Weiterhin bevorzugt sind erfindungsgemäße Formulierungen, in denen das Gewichtsverhältnis von Komponente B zu Komponente A im Bereich von 1:1 bis 1:6, bevorzugt 2:3 bis 1:5, besonders 1:2 bis 1:4, liegt.

Ebenfalls bevorzugt sind erfindungsgemäße Formulierungen, in denen das Gewichtsverhältnis von Komponente B1 zu Komponente B2 im Bereich von 2:1 bis 50:1, bevorzugt 3:1 bis 20:1, insbesondere von 4:1 bis 12:1, liegt.

Die Gesamtmenge an Komponente A, bezogen auf die Gesamtmenge der von Wasser verschiedenen Bestandteile der erfindungsgemäßen Formulierungen liegt typischerweise im Bereich von 30 bis 60 Gew.-%, insbesondere im Bereich von 35 bis 58 Gew.-% und speziell im Bereich von 40 bis 55 Gew.-%.

Die Gesamtmenge an Komponente B, bezogen auf die Gesamtmenge der von Wasser verschiedenen Bestandteile der erfindungsgemäßen Formulierungen, liegt typischerweise im Bereich von 10 bis 30 Gew.-%, insbesondere im Bereich von 11 bis 25 Gew.-% und speziell im Bereich von 12 bis 20 Gew.-%.

Als Komponente C enthalten die erfindungsgemäßen Formulierungen wenigstens eine Verbindung der Formel I, ein Salz oder ein Gemisch von verschiedenen Verbindungen der Formel I

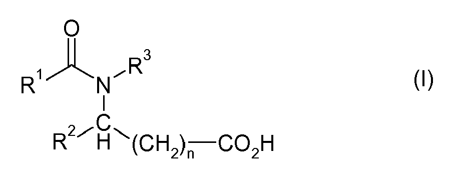

In Formel I steht R¹ für einen linearen oder verzweigten C₆-C₂₂-Alkyl- oder C₆-C₂₂-Alkenylrest. R² steht für Wasserstoff oder eine C₁-C₄-Alkylgruppe, vorzugsweise für Wasserstoff. R³ steht für Wasserstoff oder eine C₁-C₄-Alkylgruppe, vorzugweise für C₁-C₄-Alkyl und insbesondere für Methyl. Die Variable n steht insbesondere für 0.

Geeignete Salze der Verbindungen der Formel I sind die Alkalimetallsalze, z. B. die Natrium- oder Kaliumsalze sowie die Ammoniumsalze. Geeignet sind insbesondere die Verbindungen der Formel I in Form ihrer freien Säure.

In bevorzugten Ausführungsformen umfasst die Komponente C der erfindungsgemäßen Formulierungen eine Komponente C1, welche wenigstens eine Verbindung der Formel I ist, worin R¹ für einen linearen C₁₃-C₂₂-Alkylrest oder für einen C₁₃-C₂₂-Alkenylrest steht. Insbesondere steht R¹ für Tetradecyl, Pentadecyl, Hexadecyl, Heptadec-8-enyl, Heptadecyl, Octadecyl, Nonadecyl, Nonadec-10-enyl, Nonadec-8-enyl, Henicosyl und Henicos-10-enyl. R² und R³ stehen unabhängig voneinander vorzugsweise für Wasserstoff oder C₁-C₄-Alkyl, insbesondere Wasserstoff oder Methyl. Die Variable n steht insbesondere für 0. Insbesondere stehen R² für Wasserstoff und R³ für Methyl. Insbesondere bevorzugt als Komponente C1 ist Oleoyl-N-methylglycin (= N-Oleoylsarkosin). Als Komponente C1 kommen auch die Salze der zuvor genannten Verbindungen der Formel I in Betracht.

In einer ebenfalls bevorzugten Ausführungsformen umfasst die Komponente C der erfindungsgemäßen Formulierungen eine Komponente C2. Diese ist wenigstens eine Verbindung der Formel I oder ein Salz davon, worin R¹ für einen linearen C₆-C₁₂-Alkylrest oder für einen C₆-C₁₂-Alkenylrest stet. Insbesondere steht R¹ für Undecyl. R² und R³ stehen unabhängig von einander für Wasserstoff oder C₁-C₄-Alkyl, speziell für Wasserstoff oder Methyl. Die Variable n steht insbesondere für 0. Besonders bevorzugt als Komponente C2 ist Lauroyl-N-methylglycin (= N-Lauroylsarcosin).

In weiteren bevorzugten Ausführungsformen umfasst die Komponente C wenigstens eine der als Komponente C1 genannten Verbindungen der Formel I oder ein Salz davon, insbesondere eine der dort als bevorzugt genannten Verbindungen, speziell N-Oleoylsarkosin, und eine zusätzlich Komponente C2. Diese Komponente C2 ist wenigstens eine Verbindung der Formel I oder ein Salz davon, worin R¹ für einen linearen C₆-C₁₂-Alkylrest oder für einen C₆-C₁₂-Alkenylrest steht. Insbesondere steht R¹ für Undecyl. R² und R³ stehen unabhängig voneinander für Wasserstoff oder C₁-C₄-Alkyl, speziell für Wasserstoff oder Methyl. Die Variable n steht insbesondere für 0. Besonders bevorzugt als Komponente C2 ist N-Lauroylsarcosin.

Die Gesamtmenge an Komponente C, bezogen auf die Gesamtmenge der von Wasser verschiedenen Bestandteile der erfindungsgemäßen Formulierungen, liegt typischerweise im Bereich von 1 bis 20 Gew.-%, insbesondere im Bereich von 2 bis 18 Gew.-% und speziell im Bereich von 3 bis 15 Gew.-%.

Die erfindungsgemäßen Formulierungen enthalten als Komponente D wenigstens ein nichtionisches Tensid, welches ausgewählt ist unter Substanzen, die wenigstens eine Poly-C₂-C₄-oxyalkylen-Gruppe, insbesondere wenigstens eine Polyoxyethylengruppe oder wenigstens eine Poly[oxyethylen-co-oxypropylen]gruppe aufweisen. Derartige Tenside weisen üblicherweise wenigstens einen, z. B. 1, 2 oder 3 Kohlenwasserstoffrest(e) mit in der Regel wenigsten 8 C-Atomen, z. B. 8 bis 40 C-Atomen auf, an den ein oder mehrere Polyoxy-C₂-C₄-alkylene gebunden sind. Die Kohlenwasserstoffreste können Alkylgruppen, Alkenylgruppen mit jeweils 8 bis 40, insbesondere 10 bis 30 C-Atomen, cycloaliphatische Gruppen, z. B. Sterole, oder araliphatische Gruppen, z. B. C₁-C₁₆-Alkylphenyl oder Tristyrylphenyl, sein. Geeignete Kohlenwasserstoffreste können auch in Form von Mono-, Di- oder Triglyceriden vorliegen und weisen dann 1, 2 bzw. 3 von Fettsäuren abgeleitete Alkyl- oder Alkenylgruppen auf. Unter einer Polyoxy-C₂-C₄-alkylengruppe versteht man eine aliphatische Polyethergruppe, die im Mittel aus wenigstens zwei, z. B. 2 bis 100 Oxyalkylen-Wiederholungseinheiten, aufgebaut ist. Polyoxy-C₂-C₄-alkylengruppen bestehen also aus Gruppen der Formel HO-[Z-O]ₙ-, worin Z für C₂-C₄-Alkylen wie 1,2-Ethandiyl, 1,2-Propandiyl, 1-Methyl-1,2-propandiyl steht und n die Anzahl der Wiederholungseinheiten in der Polyoxy-C₂-C₄-alkylengruppe angibt. In diesen Gruppen können die Gruppen Z identisch oder verschieden sein. Derartige Tenside werden üblicherweise durch Alkoxylierung von geeigneten Alkoholen, d. h. durch Umsetzung von Alkoholen mit einem oder mehreren C₂-C₄-Oxiranen (C₂-C₄-Alkylenoxiden), wie z. B. Oxiran (Ethylenoxid), Propylenoxid, Dimethyloxiran (Isobutenoxid) Ethyloxiran oder einem Gemisch davon, hergestellt.

Geeignete Tenside der Komponente D sind beispielsweise:
- alkoxylierte C₁-C₁₅-Alkylphenole mit einem Alkoxylierungsgrad in einem Bereich von 2 bis 100, bevorzugt von 3 bis 50, insbesondere von 3 bis 30;
- alkoxylierte Mono, Di- und Tristyrylphenole mit einem Alkoxylierungsgrad in einem Bereich von 2 bis 100, bevorzugt von 5 bis 50, insbesondere von 10 bis 40;
- alkoxylierte C₈-C₂₂-Alkanole und alkoxylierte C₈-C₂₂-Alkenole, jeweils mit einem Alkoxylierungsgrad in einem Bereich von 2 bis 100, bevorzugt von 3 bis 30, insbesondere von 4 bis 20;
- alkoxylierte C₈-C₂₂-Hydroxyalkancarbonsäuren und C₈-C₂₂-Hydroxyalkencarbonsäuren mit einem Alkoxylierungsgrad in einem Bereich von 2 bis 100, bevorzugt von 5 bis 50, insbesondere von 10 bis 40;
- alkoxylierte C₈-C₂₂-Alkylamine und C₈-C₂₂-Alkenylamine mit einem Alkoxylierungsgrad in einem Bereich von 2 bis 200, bevorzugt von 3 bis 50, insbesondere von 3 bis 30;
- alkoxylierte Mono- und Diglyceride aliphatischer C₈-C₂₂-Carbonsäuren (gesättigte oder ungesättigte Fettsäuren mit 8 bis 22 C-Atomen, die gegebenenfalls eine Hydroxylgruppe tragen) sowie alkoxylierte Sorbitanester von aliphatischen C₈-C₂₂-Carbonsäuren mit einem Alkoxylierungsgrad in der Regel in einem Bereich von 10 bis 100, bevorzugt von 15 bis 70, insbesondere von 20 bis 60;
- alkoxylierte Triglyceride aliphatischer C₈-C₂₂-Hydroxycarbonsäuren (OH-Gruppen tragende gesättigte oder ungesättigte Fettsäuren mit 8 bis 22 C-Atomen) mit einem Alkoxylierungsgrad in der Regel in einem Bereich von 10 bis 100, bevorzugt von 15 bis 70, insbesondere von 20 bis 60;
- alkoxyliertes Wollwachs mit einem Alkoxylierungsgrad in einem Bereich von 10 bis 100, bevorzugt von 30 bis 90, insbesondere von 40 bis 85.

Unter den vorgenannten Substanzen sind die Ethoxilate, d. h. die durch Umsetzung mit Ethylenoxid erhaltenen Substanzen, als auch die Ethoxylat-co-propoxylate, also die Umsetzungsprodukte der vorgenannten Alkohole mit Ethylenoxid und Propylenoxid, bevorzugt.

Der Alkoxylierungsgrad der alkoxylierten Tenside beschreibt die mittlere (Zahlenmittel) Anzahl an C₂-C₄-Oxyalkylengruppen, d.h. Gruppen der Formel [Z-O] in Polyoxy-C₂-C₄-alkylengruppen, welche der Molzahl an C₂-C₄-Oxiran pro Mol OH-Gruppen der alkoxylierten Verbindung entspricht.

In bevorzugten erfindungsgemäßen Formulierungen ist die Komponente D ausgewählt unter ethoxyliertem Lanolin, Poly-C₂-C₄-oxyalkylen-C₁₀-C₂₀-alkylethern, ethoxylierten Mono-, Di- und Triglyceriden von aliphatischen C₈-C₂₂-Hydroxycarbonsäuren, und deren Gemischen.

In bevorzugten Ausführungsformen erfindungsgemäßer Formulierungen umfasst die Komponente D ethoxyliertes Lanolin, d. h. das Umsetzungsprodukt von Lanolin (Wollwachs) mit Ethylenoxid. Insbesondere umfasst die Komponente D wenigstens ein ethoxyliertes Lanolin mit einem Ethoxylierungsgrad im Bereich von 10 bis 100, bevorzugt 30 bis 90, insbesondere 40 bis 85.

In ebenfalls bevorzugten Ausführungsformen erfindungsgemäßer Formulierungen umfasst die Komponente D wenigstens einen Poly-C₂-C₄-oxyalkylen-C₁₀-C₂₀-alkylether, vorzugsweise wenigstens einen Polyoxyethylen-C₁₀-C₂₀-alkylether und/oder wenigstens einen Poly-(oxyethylen-co-oxypropylen)alkylether. Dieser weist vorzugsweise einen Alkoxylierungsgrad, insbesondere einen Ethoxlierungsgrad im Bereich von 2 bis 20, bevorzugt 3 bis 16, insbesondere 4 bis 10, auf. Vorzugsweise weist der Alkylrest 12 bis 16 C-Atome auf. Insbesondere bevorzugt sind hierunter Polyoxyethylen-C₁₂-C₁₆-alkylether mit einem vorzugsweise verzweigen C₁₂-C₁₆-Alkylrest und einem Ethoxlierungsgrad im Bereich von 2 bis 20, bevorzugt 3 bis 16, insbesondere 4 bis 10.

In ebenfalls bevorzugten Ausführungsformen erfindungsgemäßer Formulierungen umfasst die Komponente D wenigstens ein alkoxyliertes, insbesondere ethoxyliertes Mono-, Di- und Triglycerid von aliphatischen C₈-C₂₂-Hydroxycarbonsäuren oder ein Gemisch davon. Dieses weist vorzugsweise einen Alkoxylierungsgrad, insbesondere einen Ethoxlierungsgrad im Bereich von 10 bis 100, bevorzugt von 15 bis 70, insbesondere von 20 bis 60, auf. Insbesondere handelt es sich um ein alkoxyliertes, insbesondere ethoxyliertes Rizinusöl (Rizinusöl-Ethoxylat bzw. Castoroil-ethoxylat) oder ethoxyliertes hydriertes Rizinusöl, die in der Regel einen Ethoxlierungsgrad im Bereich von 10 bis 100, bevorzugt von 15 bis 70, insbesondere von 20 bis 60, aufweisen.

In besonders bevorzugten Ausführungsformen erfindungsgemäßer Formulierungen umfasst die Komponente D ein Gemisch von ethoxyliertem Lanolin (Komponente D1) mit wenigstens einem Poly-C₂-C₄-oxyalkylen-C₁₀-C₂₀-alkylether (Komponente D2). Insbesondere umfasst die Komponente D ethoxyliertes Lanolin mit einem Ethoxylierungsgrad im Bereich von 10 bis 100, bevorzugt 30 bis 90, insbesondere 40 bis 85 und wenigstens einen Poly-C₂-C₄-oxyalkylen-C₁₀-C₂₀-alkylether, speziell wenigstens einen Polyoxyethylen-C₁₀-C₂₀-alkylether und/oder wenigstens einen Poly-(oxyethylen-co-oxypropylen)alkylether mit einem Alkoxylierungsgrad, insbesondere einem Ethoxlierungsgrad im Bereich von 2 bis 20, bevorzugt 3 bis 16, insbesondere 4 bis 10. In diesen Ausführungsformen liegt das Gewichtsverhältnis von Komponente D1 zu Komponente D2 vorzugsweise im Bereich von 1:20 bis 5:1 und insbesondere im Bereich von 1:10 bis 1:1.

In ebenfalls besonders bevorzugten Ausführungsformen erfindungsgemäßer Formulierungen umfasst die Komponente D ein Gemisch von ethoxyliertem Lanolin (Komponente D1) mit wenigstens einer unter ethoxylierten Mono-, Di- und Triglyceriden aliphatischen C₈-C₂₂-Hydroxycarbonsäuren oder deren Gemischen ausgewählten Substanz (Komponente D3). Insbesondere umfasst die Komponente D ethoxyliertes Lanolin mit einem Ethoxylierungsgrad im Bereich von 10 bis 100, bevorzugt 30 bis 90, insbesondere 40 bis 85 und ethoxyliertes Rizinusöl (Rizinusöl-Ethoxylat bzw. Castoroil-ethoxylat) oder ethoxyliertes hydriertes Rizinusöl, wobei das ethoxylierte Rizinusöl und das ethoxylierte, hydrierte Rizinusöl in der Regel einen Ethoxylierungsgrad im Bereich von 10 bis 100, bevorzugt von 15 bis 70, insbesondere von 20 bis 60 aufweisen. In diesen Ausführungsformen liegt das Gewichtsverhältnis von Komponente D1 zu Komponente D3 vorzugsweise im Bereich von 1:20 bis 5:1 und insbesondere im Bereich von 1:10 bis 1:1.

In einer speziellen Ausführungsform erfindungsgemäßer Formulierungen umfasst die Komponente D ein wenigstens ternäres Gemisch der zuvor genannten Komponenten D1, D2 und D3. In dieser Ausführungsform liegt das Gewichtsverhältnis von Komponente D1 zu Komponente D3 vorzugsweise im Bereich von 1:20 bis 5:1 und insbesondere im Bereich von 1:10 bis 1:1 und das Gewichtsverhältnis von D2 zu Komponente D3 vorzugsweise im Bereich von 1:20 bis 5:1 und insbesondere im Bereich von 1:10 bis 1:1. Das Gewichtsverhältnis von Komponente D1 zu D2 ist dann vorzugsweise im Bereich von 5:1 bis 1:5, insbesondere im Bereich von 3:1 bis 1:3.

Die Gesamtmenge an Komponente D, bezogen auf die Gesamtmenge der von Wasser verschiedenen Bestandteile der erfindungsgemäßen Formulierungen, liegt typischerweise im Bereich von 5 bis 25 Gew.-%, insbesondere im Bereich von 8 bis 22 Gew.-% und speziell im Bereich von 10 bis 20 Gew.-%.

Die Komponente E umfasst in den erfindungsgemäßen Formulierungen wenigstens eine Aminosäure mit einem isoelektrischen Punkt im Bereich von 5 bis 7. Beispiele für derartige Aminosäuren sind Alanin, Asparagin, Asparaginsäure, Glutamin, Glutaminsäure, Glycin, Isoleucin, Leucin, Lysin, Methionin, Phenylalanin, Prolin, Serin, Threonin, Tryphtophan, Tyrosin und Valin. Bevorzugt ist die Komponente E unter Alanin, Glycin, Isoleucin, Leucin, Prolin, Serin, Threonin und Valin ausgewählt. Insbesondere bevorzugt handelt es sich bei der Komponente E um Glycin.

Die Gesamtmenge an Komponente E, bezogen auf die Gesamtmenge der von Wasser verschiedenen Bestandteile der erfindungsgemäßen Formulierungen, liegt typischerweise im Bereich von 3 bis 20 Gew.-%, insbesondere im Bereich von 4 bis 16 Gew.-% und speziell im Bereich von 5 bis 12 Gew.-%.

In bevorzugten Ausführungsformen der Erfindung enthalten die Formulierungen die Komponenten A bis E in folgenden Anteilen, bezogen auf das Gesamtgewicht der von Wasser verschiedenen Bestandteile:
a) 30 bis 60 Gew.% Komponente A;
b) 10 bis 30 Gew.-% der Komponente B;
c) 1 bis 20 Gew.-% der Komponente C;
d) 5 bis 25 Gew.-% der Komponente D und
e) 3 bis 20 Gew.-% der Komponente E.

Besonders bevorzugt weisen die erfindungsgemäßen Formulierungen folgende Zusammensetzung auf:
a) 35 bis 58 Gew.% Komponente A;
b) 11 bis 25 Gew.-% der Komponente B;
c) 2 bis 18 Gew.-% der Komponente C;
d) 8 bis 22 Gew.-% der Komponente D und
e) 4 bis 16 Gew.-% der Komponente E;
wobei die Angaben in Gew.-% jeweils auf das Gesamtgewicht der von Wasser verschiedenen Bestandteile der Formulierungen bezogen sind.

Insbesondere bevorzugt weisen die erfindungsgemäßen Formulierungen folgende Zusammensetzung auf:
a) 40 bis 55 Gew.% Komponente A;
b) 12 bis 20 Gew.-% der Komponente B;
c) 3 bis 15 Gew.-% der Komponente C;
d) 10 bis 20 Gew.-% der Komponente D und
e) 5 bis 12 Gew.-% der Komponente E;
wobei die Angaben in Gew.-% jeweils auf das Gesamtgewicht der von Wasser verschiedenen Bestandteile der Formulierung bezogen sind.

In einer besonders bevorzugten Ausführungsform 1 der Erfindung enthalten die Formulierungen die Komponenten A bis E in folgenden Anteilen, bezogen auf das Gesamtgewicht der von Wasser verschiedenen Bestandteile:
a) 30 bis 60 Gew.%, insbesondere 35 bis 58 Gew.% und speziell 40 bis 55 Gew.% der Komponente A;
b) 10 bis 30 Gew.-%, insbesondere 11 bis 25 Gew.-% und speziell 12 bis 20 Gew.-% der Komponente B, wobei die Komponente wenigstens eine der als Komponente B1 genannten Substanzen und wenigstens eine der als Komponente B2 genannten Substanzen umfasst oder daraus besteht;
c) 1 bis 20 Gew.-%, insbesondere 2 bis 18 Gew.-% und speziell 3 bis 15 Gew.-% der Komponente C, wobei die Komponente C wenigstens eine der als Komponente C1 genannten Substanzen und gegebenenfalls eine oder mehrere der als Komponente C2 genannten Substanzen umfasst oder daraus besteht;
d) 5 bis 25 Gew.-%, insbesondere 8 bis 22 Gew.-% und speziell 10 bis 20 Gew.-% der Komponente D, wobei die Komponente D wenigstens eine der als Komponente D1 genannten Substanzen und wenigstens eine der als Komponente D2 genannten Substanzen und gegebenenfalls eine oder mehrere der als Komponente D3 genannten Substanzen umfasst oder daraus besteht, und
e) 3 bis 20 Gew.-%, insbesondere 4 bis 16 Gew.-% und speziell 5 bis 12 Gew.-% der Komponente E.

In einer ebenfalls besonders bevorzugten Ausführungsform 2 der Erfindung enthalten die Formulierungen die Komponenten A bis E in folgenden Anteilen bezogen auf das Gesamtgewicht der von Wasser verschiedenen Bestandteile:
a) 30 bis 60 Gew.%, insbesondere 35 bis 58 Gew.% und speziell 40 bis 55 Gew.% der Komponente A;
b) 10 bis 30 Gew.-%, insbesondere 11 bis 25 Gew.-% und speziell 12 bis 20 Gew.-% der Komponente B, wobei die Komponente wenigstens eine der als Komponente B1 genannten Substanzen und wenigstens eine der als Komponente B2 genannten Substanzen umfasst oder daraus besteht;
c) 1 bis 20 Gew.-%, insbesondere 2 bis 18 Gew.-% und speziell 3 bis 15 Gew.-% der Komponente C, wobei die Komponente C wenigstens eine der als Komponente C2 genannten Substanzen umfasst oder daraus besteht;
d) 5 bis 25 Gew.-%, insbesondere 8 bis 22 Gew.-% und speziell 10 bis 20 Gew.-% der Komponente D, wobei die Komponente D wenigstens eine der als Komponente D1 genannten Substanzen und wenigstens eine der als Komponente D2 genannten Substanzen und gegebenenfalls eine oder mehrere der als Komponente D3 genannten Substanzen umfasst oder daraus besteht;
e) 3 bis 20 Gew.-%, insbesondere 4 bis 16 Gew.-% und speziell 5 bis 12 Gew.-% der Komponente E.

Vorzugsweise enthalten die erfindungsgemäßen Formulierungen, insbesondere die Formulierungen der bevorzugten Ausführungsformen und die Formulierungen der besonders bevorzugten Ausführungsformen und speziell die Formulierungen der Ausführungsformen 1 und 2 als zusätzliche Komponente G wenigstens ein Alkylpolyglukosid. Unter Alkylpolyglucosiden versteht man Verbindungen, die einen oder mehrere, insbesondere einen Alkylrest, insbesondere einen C₆-C₂₂-Alkylrest aufweisen, der über ein Sauerstoffatom an einen Mono- oder Oligosaccharid-Rest, z. B. an einen Mono-, Di- oder Trisaccharid-Rest gebundenen ist. Die Saccharid-Einheiten sind dabei typischerweise von Glucose abgeleitet. Bevorzugte Alkylglykoside sind solche, die im Mittel 1 bis 5, insbesondere 1 bis 2 Glucoseeinheiten aufweisen. In der Regel handelt es sich hierbei um Gemische. Die Menge an Alkylpolyglukosid wird in der Regel 5 Gew.-%, und speziell 1 Gew.-%, bezogen auf das Gesamtgewicht der Formulierung, nicht überschreiten und beträgt, sofern enthalten, typischerweise 0,01 bis 5 Gew.-%, insbesondere 0,1 bis 1 Gew.-%, bezogen auf das Gesamtgewicht der Formulierung.

Vorzugsweise weisen die erfindungsgemäßen Formulierungen einen pH-Wert im Bereich von 3 bis 5,5, bevorzugt im Bereich von 3,8 bis 5,2 und insbesondere im Bereich von 4,2 bis 5,0 auf (pH-Wert der unverdünnten Formulierung, bestimmt nach CIPAC MT 75.3).

Bevorzugte Ausführungsform der erfindungsgemäßen Formulierungen betreffen Konzentrate, welche die Komponente A typischerweise in einer Konzentration von 15 bis 50 Gew.-%, insbesondere 20 bis 40 Gew.-%, bezogen auf das Gesamtgewicht der Formulierung enthalten. Diese Konzentrate werden vor ihrer Anwendung als Herbizid typischerweise durch Verdünnen mit Wasser auf die für die gewünschte Anwendung geeignete Konzentration verdünnt.

Weitere Ausführungsformen der Erfindung betreffen Formulierungen für die direkte Anwendung. Diese Formulierungen können direkt, d. h. ohne weiteres Verdünnen, angewendet werden. Diese Formulierungen enthalten die Komponente A typischerweise in einer Konzentration von 0,1 bis 5 Gew.-%, häufig 1 bis 5 Gew.-%, bezogen auf das Gesamtgewicht der Formulierung.

Die erfindungsgemäßen Formulierungen können zusätzlich noch weitere Stoffe enthalten, die nicht im unmittelbaren Zusammenhang mit der Zielsetzung der Formulierung stehen, aber ihre Anwendbarkeit und/oder praktischen Eigenschaften verbessern. Beispiele hierfür sind insbesondere Viskositäts-Regler (Verdicker), Konservierungsmittel, Antischaummittel sowie Frostschutzmittel.

Entsprechende Stoffe sind dem Fachmann geläufig. Die Gesamtmenge derartiger Stoffe wird in der Regel 10 Gew.-% und insbesondere 1 Gew.-%, bezogen auf das Wirkstoffkonzentrat nicht überschreiten und liegt, sofern enthalten, typischerweise im Bereich von 0,01 bis 10 Gew.-%, insbesondere im Bereich von 0,01 bis 1 Gew.-%, bezogen auf das Gesamtgewicht der Wirkstoffkonzentrats.

Zu den die Viskosität verändernden Additiven (Viskositätsregler, Andicker bzw. Verdicker) zählen insbesondere Verbindungen, die bekanntermaßen wässrigen Formulierungen ein pseudoplastisches Fließverhalten verleihen, d. h. eine hohe Viskosität im Ruhezustand und eine niedrige Viskosität im bewegten Zustand. Geeignet sind grundsätzlich alle für diesen Zweck in wässrigen Wirkstoffkonzentraten eingesetzte Verbindungen. Zu nennen sind beispielsweise anorganische Substanzen wie Bentonite oder Attapulgite (z. B. Attaclay^{®} Firma Engelhardt). Zu nennen sind weiterhin organische Substanzen wie Polysaccharide und Heteropolysaccharide wie Carrageen, Alginate, Guaran und Xanthan, z. B. die unter den Handelsbezeichnungen Kelzan^{®} der Fa. Kelco und Rhodopol^{®}, z. B. die Rhodopol^{®}-Typen 23, 50MC, G, T und TG der Fa. Rhodia vertriebenen Xanthan-Produkte, wobei Xanthan und modifiziertes Xanthan bevorzugt verwendet wird. Die Menge der die Viskosität verändernden Additive, sofern enthalten, beträgt häufig 0,1 bis 5 Gew.-%, bezogen auf das Gesamtgewicht der erfindungsgemäßen Formulierungen.

Als geeignete Antischaummittel kommen beispielsweise für diesen Zweck bekannte Silikonemulsionen (Silikon^{®} SRE, Firma Wacker oder Rhodorsil^{®} der Firma Rhodia), langkettige Alkohole, Fettsäuren, Entschäumer vom Typ wässriger Wachsdispersionen, feste Entschäumer (sog. Compounds), fluororganische Verbindungen und deren Gemische in Betracht. Die Menge an Antischaummittel, sofern enthalten, beträgt häufig 0,1 bis 1 Gew.-%, bezogen auf das Gesamtgewicht der erfindungsgemäßen Formulierungen.

Konservierungsmittel sind beispielsweise Alkylester der para-Hydroxybenzoesäure, Natriumbenzoat, 2-Brom-2-nitropropan-1,3-diol, ortho-Phenylphenol, Dichlorophen, Benzylalkoholhemiformal, Pentachlorophenol, 2,4-Dichlorbenzylalkohol sowie insbesondere substituierte Isothiazolone wie z. B. C₁-C₁₀-Alkylisothiazolinone, 5-Chlor-2-methyl-4-isothiazolinon und Benzoisothiazolinonen, beispielsweise Proxel^{®} der der Fa. Avecia (bzw. Fa. Arch) oder die Acticide^{®} Typen wie Acticide^{®} RS oder Acticide^{®} B der Fa. Thor Chemie oder die Kathon^{®} Typen wie Kathon^{®} MK der Firma Rohm & Haas. Die Menge an Konservierungsmitteln beträgt, sofern vorhanden, typischerweise 0,01 bis 0,5 Gew.-%, bezogen auf das Gesamtgewicht der erfindungsgemäßen Formulierungen.

Die Herstellung der erfindungsgemäßen Formulierungen kann in an sich bekannter Weise in Analogie zur Herstellung wässriger Emulsionen von Ölen erfolgen. Hierzu wird man üblicherweise die Bestandteile der Formulierung miteinander vermischen. In der Regel wird man die Komponente D in Wasser lösen, die so erhaltene Lösung mit den Komponenten A, B und C vermischen, gegebenenfalls unter Rühren, und dann die Komponente E und gegebenenfalls weitere Komponenten einarbeiten. Diese Schritte können bei Raumtemperatur oder bei erhöhter Temperatur, z. B. bei Temperaturen im Bereich von 20 bis 90 °C und insbesondere bei Temperaturen im Bereich von 30 bis 80 °C, durchgeführt werden. Sofern die Formulierung die Komponente G enthält, kann es zweckmäßig sein, diese zusammen mit der Komponente D in Wasser zu lösen. Die erfindungsgemäßen Formulierungen, welche für die direkte Anwendung formuliert sind, können auch durch Verdünnen der Konzentrate mit Wasser oder einer wässrigen Lösung der Komponenten D und gegebenenfalls G hergestellt werden.

Ein weiterer Gegenstand der Erfindung ist die Verwendung der erfindungsgemäßen Formulierungen zur Bekämpfung von unerwünschtem Pflanzenwuchs.

Die erfindungsgemäßen herbiziden Formulierungen eignen sich als Totalherbizid zur Bekämpfung von Algen, Moosen und Unkräutern, insbesondere von Unkräutern aus den Familien der Korbblütler, Dickblattgewächse, Hylocomiaceae, Marchantiacea, Süßgräser, Gänsefußgewächse, Knöterichgewächse, Doldenblütler, Kreuzblütengewächse, Raublattgewächse, Wegerichsgewächse, Rötegewächse, Storchschnabelgewächse und Chloroplastida wie Grünalgen sowie Horn-, Leber-, und Laubmoose. Die erfindungsgemäßen Formulierungen eignen sich im Besonderen zur Bekämpfung von unerwünschtem Pflanzenwuchs wie Moosen, Algen und rasenbürtigen Unkräutern im Rasen und in Beeten mit Ziergehölz. Dabei ist die erfindungsgemäße Formulierung in Abhängigkeit von der Anwendungskonzentration selektiv und schädigt Rasen und Ziergehölzer nicht oder kaum. Des Weiteren eignet sich die erfindungsgemäße Formulierung ebenfalls besonders für die Bekämpfung von unerwünschten Pflanzen auf Wegen und Plätzen mit und ohne Baumbestand.

Die Applikation der erfindungsgemäßen herbiziden Formulierungen erfolgt in der Regel in Form einer wässrigen Spritz- oder Gießbrühe. Dazu wird die Formulierung in einer für die Applikation geeigneten Form mit einem für die gewünschte Anwendung geeigneten Gehalt an Komponente A, z. B. einem Gehalt von 0,1 bis 5 Gew.-%, eingesetzt.

Die Applikation der erfindungsgemäßen Formulierungen erfolgt typischerweise im Nachauflauf, d. h. nach dem Auflaufen der Schadpflanzen.

Das Ausbringen der applikationsbereiten Formulierungen kann beispielsweise mit handelsüblichen Feinsprühern, Drucksprühern oder Gießkannen erfolgen. Im Nachlauflaufverfahren wird die Formulierung auf den unerwünschten Pflanzenwuchs gesprüht oder gegossen und anschließend einwirken gelassen. Wegen der geringen Verschmutzungseigenschaften braucht die Fläche nach der Behandlung nicht gereinigt zu werden.

Zur Verbreiterung des Wirkungsspektrums und zur Erzielung synergistischer Effekte können die erfindungsgemäßen herbiziden Formulierungen vor dem Ausbringen mit zahlreichen Vertretern anderer herbizider oder wachstumsregulierender Wirkstoffgruppen gemischt und gemeinsam ausgebracht werden, beispielsweise im Tank-Mix. Der Mischungspartner richtet sich dabei in der Regel nach der Art der gewünschten Anwendung. Beispiele für geeignete Mischungspartner sind insbesondere Formulierungen von Glyphosate und dessen Salzen wie Glyphosate-Kalium, Glyphosate-Sesquinatrium, Glyphosate-Monoammonium, Glyphosate-Diammonium, Glyphosate-Dimethylammonium, Glyphosate-Isopropylamonium, Glyphosate-Trimesium, sowie Formulierungen von Maleinsäurehydrazid und dessen Salzen.

Außerdem kann es von Nutzen sein, die erfindungsgemäße Formulierung vor dem Ausbringen auch noch mit weiteren Pflanzenschutzmitteln zu vermischen und gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden.

Die folgenden Beispiele sollen die Erfindung veranschaulichen und sollen nicht einschränkend verstanden werden.

### A Herstellungsbeispiele

Es wurden die folgenden Einsatzstoffe verwendet:
- Pelargonsäure: Handelsübliches Gemisch von linearen C₈-C₁₀-Alkancarbonsäuren mit einem Pelargonsäuregehalt > 90 Gew.-%
- Octadecansäure-2-ethylhexylester (Crodamol OS der Fa. Croda GmbH)
- Tetradecansäureisopropylester (Tetradecylmyristat)
- Oleoyl-N-methylglycin (Crodasinic O der Fa. Croda GmbH)
- Lauroyl-N-methylglycin (Crodasinic L der Fa. Croda GmbH)
- Natriumlauroylsarcosinat, 30 gew.-%ige wässrige Lösung (Crodasinic LS 30 der Fa. Croda GmbH)
- Ethoxy-(75)-lanolin (Solan E der Fa. Croda GmbH)
- Ethoxiliertes Isotridecanol, Ethoxilierungsgrad 8-9 (Genapol X 080 der Fa. Clariant)
- Alkylpolyglycosid: C₈-C₁₀-Alkylpolyglycosid mit einem Polymerisationsgrad von 1,5, Aktivgehalt 50-70 Gew.-% (Agnique PG 8105-G der Fa. Cognis GmbH)
- Biozid: 1,2-Benzisothiazolon, 20 gew.-%ig (Acticide B20, Thor-Chemie)
- Rizinusöl-(35)-Polyethoxylat: Ethoxyliertes Rizinusöl mit einem Ethoxylierungsgrad von 35, CAS-Nr. 61791-12-6 (Cremophor EL der BASF SE).

### Beispiel 1: Formulierung als Konzentrat

Zur Herstellung einer erfindungsgemäßen Formulierung wurden in einem geeigneten Gefäß 442,7 g entionisiertes Wasser vorgelegt. Unter Rühren wurden in der Vorlage 1,5 g Alkylpolyglykosid und 20 g Ethoxy-(75)-lanolin gelöst. Anschließend erwärmte man auf 50 °C, gab 50 g ethoxiliertes Isotridecanol zu und rührte bei 50 °C, bis eine homogene wässrige Lösung vorlag. 270,7 g Pelargonsäure (90%ig), 80 g Octadecansäure-2-ethylhexylester, 10 g Tetradecansäureisopropylester und 75 g Oleoyl-N-methylglycin wurden miteinander vermischt. Die so erhaltene homogene Mischung wurde unter Rühren bei 50 °C in die homogene wässrige Lösung eingearbeitet, wobei man eine wässrige Emulsion erhielt. In diese wässrige Emulsion wurden unter Rühren bei 50 °C 40 g Glycin eingearbeitet, bis das Glycin gelöst war. Danach gab man unter Rühren 10 g einer 30 gew.-%igen wässrigen Lösung von Natriumlauroylsarcosinat zu und emulgierte mit einem Ultra-Turrax 5 Minuten bei 15.000 Umdrehungen/Minute. Auf diese Weise erhielt man eine stabile wässrige Emulsion mit einem Gehalt von 237,6 g/l Pelargonsäure und einem pH-Wert von 4,5 bis 4,8 Die Emulsion ließ sich problemlos mit Wasser auf die gewünschte Anwendungskonzentration verdünnen. Aufgrund ihres pH-Wertes wirkte sie nicht reizend auf tierisches Gewebe. Die Emulsion zeigte auch nach 40 Wochen Lagerung bei 20 - 25 °C keine Entmischung.

### Beispiel 2: Formulierung als Konzentrat mit Rizinusöl-(35)-polyethoxylat

In einem geeigneten Gefäß wurden 481,5 g entionisiertes Wasser vorgelegt. Unter Rühren wurden in der Vorlage 1,5 g Alkylpolyglykosid und 20 g Ethoxy-(75)-lanolin gelöst. Anschließend erwärmte man auf 50 °C, gab 20 g ethoxiliertes Isotridecanol und 60 g Rizinusöl-(35)-polyethoxylat zu und rührte bei 50 °C, bis eine homogene wässrige Lösung vorlag. 267 g Pelargonsäure (90%ig), 80 g Octadecansäure-2-ethylhexylester, 10 g Tetradecansäureisopropylester und 20 g Lauroyl-N-methylglycin wurden miteinander vermischt. Die so erhaltene homogene Mischung wurde unter Rühren bei 50 °C in die homogene wässrige Lösung eingearbeitet, wobei man eine wässrige Emulsion erhielt. In diese wässrige Emulsion wurden unter Rühren bei 50 °C 40 g Glycin eingearbeitet, bis das Glycin gelöst war. Danach emulgierte man mit einem Ultra-Turrax 5 Minuten bei 15.000 Umdrehungen/Minute. Auf diese Weise erhielt man eine stabile wässrige Emulsion mit einem Gehalt von 237,6 g/l Pelargonsäure und einem pH-Wert von 4,5 bis 4,8 Die Emulsion ließ sich problemlos mit Wasser auf die gewünschte Anwendungskonzentration verdünnen.

### Beispiele 3 und 4: Formulierung als Konzentrat

In zu Beispiel 1 analoger Weise wurden die Konzentrate der Beispiele 3 und 4 hergestellt. Die Zusammensetzung der Formulierungen der Beispiele 1 bis 4 sind in Tabelle 1 angegeben.

**Tabelle 1:**

| | Beispiel 1 | Beispiel 2 | Beispiel 3 | Beispiel 4 |
|---|---|---|---|---|
| Pelargonsäure (90%ig) [Gew.-%] | 27,1 | 26,7 | 30 | 30 |
| Octadecansäure-2-ethylhexylester [Gew.-%] | 8,0 | 8,0 | 8,0 | 8,0 |
| Tetradecansäureisproylester [Gew.-%] | 1,0 | 1,0 | 1,0 | 1,0 |
| Oleoyl-N-methylglycin [Gew.-%] | 7,5 | 0 | 8,0 | 6,0 |
| Lauroyl-N-methylglycin [Gew.-%] | 0 | 2,0 | 0 | 0 |
| Natriumlauroylsarcosinat* [Gew.-%] | 0,3 (1,0*) | 0 | 0 | 0,3 (1,0*) |
| Ethoxiliertes Isotridecanol [Gew.-%] | 5,0 | 2 | 5,0 | 5,0 |
| Ethoxy-(75)-lanolin [Gew.-%] | 2,0 | 2 | 2,0 | 2,0 |
| Rizinusöl-(35)-polyethoxylat [Gew.-%] | 0 | 6,0 | 0 | 0 |
| Glycin [Gew.-%] | 4,0 | 4,0 | 4,0 | 5,0 |
| Alkylpolyglycosid [Gew.-%] | 0,15 | 0,15 | 0,15 | 0,25 |
| Wasser [Gew.-%] | ad 100 | ad 100 | ad 100 | ad 100 |

| | | | | |
|---|---|---|---|---|
| * Der mit * bezeichnete Wert bezieht sich auf die 30 gew.-%ige wässrige Lösung | | | | |

### Beispiel 5: (Formulierung für die direkte Anwendung)

Zur Herstellung einer applikationsbereiten Form der erfindungsgemäßen Formulierung, wurden in 127,4 g der in Beispiel 1 beschriebenen Formulierung mit einer wässrigen Lösung von 0,5 g Oleoyl-N-methylglycin und 0,5 g einer 20 % 1,2-Benzisothiazol-3(2H)-on-Zusammensetzung in 872 ml entionisiertem Wasser verdünnt. Die so erhaltene Formulierung wies einen Gehalt von 31 g/l Pelargonsäure und einem pH-Wert von 4,5 bis 5,0 auf. Aufgrund ihres pH-Wertes wirkte sie nicht reizend auf tierisches Gewebe. Die Formulierung zeigte auch nach 40 Wochen Lagerung bei 20 - 25 °C keine Entmischung.

### B Untersuchung der herbiziden Wirkung

Die herbizide Wirkung der erfindungsgemäßen Pelargonsäure-Formulierungen gegen Unkräuter ließ sich durch die folgenden GEP Freilandversuche zeigen:
Alle Versuche wurden gemäß den folgenden EPPO-Richtlinien:
   PP 1/117 (2) Unkräuter auf Nichtkulturland
   PP 1/136 (2) Unkräuter in Zier- und Sportrasen
   PP-1/141 (2) Unkräuter in Baumschulen
durchgeführt und mit in den Anwendungsbeispielen genannten Aufwandmengen im Nachauflaufverfahren behandelt.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf. Als Unkräuter wurden die in Tabelle 2 aufgeführten Pflanzen verwendet:

**Tabelle 2**

| Name (Latein) | Name (Englisch) | Name (Deutsch) |
|---|---|---|
| Avena sterilis | Sterile oat | tauber Hafer |
| Achillea millefolium | Milfoil | Gemeine Schafgarbe |
| Anthriscus sylvestris | Woodland beak chervil | Wiesenkerbel |
| Agropyron repens | Quackgrass | Gemeine Quecke |
| Bryophyta | mosses | Moose |
| Carduus acanthoides | Plumeless thistle | Wegdistel |
| Chenopodium album | common lambsquarter | weißer Gänsefuß |
| Cirsium arvense | creeping thistle | Acker-Kratz-Distel |
| Cynodon dactylon | Bermuda grass | Bermudagras |
| Dactylis glomerata | Orchard grass | Wiesenknäuelgras |
| Diplotaxis virgata | sand mustard | - |
| Echium creticum | - | - |
| Erigeron canadensis | canada horseweed | kanadisches Berufskraut |
| Fallopia convolvulvus | Black bindweed | Gemeiner Windenknöterich |
| Festuca rubra | red fescue | roter Schwingel |
| Filago arvensis | least cudweed | Ackerfilzkraut |
| Funaria hygrometrica | Funaria hygrometrica | Funaria hygrometrica |
| Geranium solandri | native geranium | natives Geranium |
| Hieracium pilosella | mouse-ear hawkweed | kleines Habichtskraut |
| Hypnum cupressiforme | Hypnum cupressiforme | Hypnum cupressiforme |
| Holcus lanatus | meadow soft grass | wolliges Honiggras |
| Marchantia polymorpha | star-liverwort | Stern-Lebermoos |
| Melilotus alba | White sweet clover | weißer Steinklee |
| Ornithopus compressus | Yellow seradella | gelbe Seradella |
| Plantago lanceolata | Buckhorn plant | Spitzwegerich |
| Poa annua | annual bluegrass | einjähriges Rispengras |
| Poa pratensis | Kentucky bluegrass | Wiesenrispengras |
| Polygonum aviculare | knotgrass | Vogelknöterich |
| Rhytidiadelphus squarrosus | Rhytidiadelphus squarrosus | sperriges Kranzmoos |
| Sanguisorba minor magnolii | - | - |
| Sedum acre | biting stonecrop | scharfe Fetthenne |
| Senecio vulgaris | Common groundsel | Gemeines Geiskraut |
| Sherardia arvensis | field madder | gemeine Ackerröte |
| Sonchus arvensis | Perennial sowthistle | Ackergänsedistel |
| Taraxacum officinale | common dandelion | Löwenzahn |
| Torillis arvensis | Spreading burparsley | Acker-Klettenkerbel |
| Trigonella monspeliaca | Trigonella monspeliaca | Trigonella monspeliaca |
| Urtica dioica | Common nettle | Große Brennnessel |
| Vicia villosa | Hairy vetch | Zottige Wicke |

### Anwendungsbeispiel 1

Die herbizide Wirkung der Formulierung aus Beispiel 3 und verschiedenen kommerziellen Formulierungen wurde an den in den Tabellen 3, 4 und 5 angegebenen Unkräutern getestet.

**Tabelle 3**

| Formulierung | Beispiel 3 | Beispiel 3 | Vergleichsformulierung 1 ¹) | Vergleichsformulierung 2²) |
|---|---|---|---|---|
| Aufwandmenge ³⁾ | 77 L/ha | 115 L/ha | 166 L/ha | 5 L/ha |
| Bewertungszeitpunkt (DAT)⁴⁾ | 10 | 10 | 10 | 10 |
| Avena sterilis | 98,75 | 90 | 98,25 | 98,75 |
| Torillis arvensis | 98 | 98 | 92,25 | 20 |
| Ornithopus compressus | 100 | 100 | 100 | 43,75 |
| Diplotaxis virgata | 100 | 100 | 80 | 40 |
| Sanguisorba minor magnolii | 95 | 99 | 80 | 98,25 |
| Echium creticum | 85 | 90 | 20 | 50 |

| Formulierung | Beispiel 3 | Beispiel 3 | Vergleichsformulierung 1 ¹) | Vergleichsformulierung 2 ²) |
|---|---|---|---|---|
| Aufwandmenge ³⁾ | 77 L/ha | 115 L/ha | 166 L/ha | 5 L/ha |
| Bewertungszeitpunkt (DAT)⁴⁾ | 10 | 10 | 10 | 10 |
| Cynodon dactylon | 99 | 99 | 70 | 95 |
| Plantago lanceolata | 99 | 98 | 85 | 30 |
| Sherardia arvensis | 100 | 100 | 100 | 30 |
| Unkrautmix | 97,25 | 99 | 83 | 60 |

| | | | | |
|---|---|---|---|---|
| ¹) Handelsübliche Pelargonsäureformulierung: Finalsan Unkrautfrei, W. Neudorff GmbH KG, Pelargonsäure 186,7 g/L Pelargonsäure ²) Handelsübliche Glufosinat-Formulierung: Finale, Bayer Cropscience S.L, Ammoniumglufosinat 15 Gew.-% ³) Aufwandmenge an Formulierung ⁴) Tage nach Behandlung | | | | |

Die herbizide Wirkung der erfindungsgemäßen Formulierung ist nach zehn Tagen mindestens dem Stand der Technik ebenbürtig und in den meisten Fällen überlegen.

**Tabelle 4**

| Formulierung/ Aufwandmenge ²⁾ | Beispiel 3 115 L/ha | | | | Vergleichsformulierung 1 ¹) 166 L/ha | | | |
|---|---|---|---|---|---|---|---|---|
| Bevvertungszeitpunkt (DAT)³⁾ | 4 | 8 | 26 | 47 | 4 | 8 | 26 | 47 |
| Unkrautart | | | | | | | | |
| Geranium solandri | 100 | 100 | 100 | 97,50 | 100 | 100 | 98,75 | 98,75 |
| Hieracium pilosella | 92,5 | 90,5 | 88,75 | 85 | 87,50 | 83,75 | 71,25 | 51,25 |
| Taraxacum officinale | 96,25 | 90 | 73,75 | 48,75 | 90 | 87,50 | 60 | 31,25 |
| Erigeron canadensis | 61,25 | 70 | 78,75 | 100 | 67,50 | 68,75 | 56,25 | 100 |
| Sedum acre | 83 | 81,25 | 58,75 | 61,25 | 77,50 | 73,75 | 56,25 | 52,5 |
| Holcus lanatus | 98,75 | 98,75 | 91,25 | 95 | 91,25 | 88,75 | 80 | 76,25 |
| Filago arvensis | 100 | 100 | 100 | 100 | 81,25 | 78,75 | 82,50 | 68,75 |
| Cirsium arvense | 100 | 97,50 | 91,25 | 95 | 100 | 100 | 85 | 70 |
| Rhytidiadelphus squarrosus | 100 | 100 | 98,75 | 72,50 | 100 | 100 | 83,75 | 66,25 |
| Festuca rubra | 77,50 | 73,75 | -- | 53,75 | 87,50 | 93,75 | -- | 23,75 |

| | | | | | | | | |
|---|---|---|---|---|---|---|---|---|
| ¹) Handelsübliche Pelargonsäureformulierung: Finalsan Unkrautfrei, W. Neudorff GmbH KG, Pelargonsäure 186,7 g/L Pelargonsäure ²) Aufwandmenge an Formulierung ³) Tage nach Behandlung | | | | | | | | |

**Tabelle 5**

| Formulierung/ Aufwandmenge ²⁾ | Beispiel 3 107 L/ha | | | Vergleichsformulierung 1 ¹) 166 L/h | | |
|---|---|---|---|---|---|---|
| Bewertungszeitpunkt (DAT) ³⁾ | 7 | 20 | 90 | 7 | 20 | 90 |
| Unkrautart | | | | | | |
| Marchantia polymorpha | 92,50 | 92 | 90,5 | 78,75 | 86,25 | 86,25 |
| Bryophyta | 97,50 | 100 | 100 | 91,25 | 100 | 100 |
| Poa annua | 91,25 | 94,75 | | 91,25 | 96,75 | |
| Chenopodium album | 91,25 | 95 | | 92,50 | 100 | |
| Polygonum aviculare | 96,25 | 100 | | 100 | 100 | |

| | | | | | | |
|---|---|---|---|---|---|---|
| ¹) Handelsübliche Pelargonsäureformulierung: Finalsan Unkrautfrei, W. Neudorff GmbH KG, Pelargonsäure 186,7 g/L Pelargonsäure ²) Aufwandmenge an Formulierung ³) Tage nach Behandlung | | | | | | |

Diese Untersuchung zeigt, dass sowohl die kurzfristige Wirksamkeit der erfindungsgemäßen Formulierung nach 4 bzw. 7 Tagen als auch ihre langfristige Wirksamkeit nach 47 bzw. 90 Tagen der Wirksamkeit von handelsüblichen Pelargonsäureformulierungen bereits bei geringerer Aufwandmenge der Formulierung meist überlegen ist.

### Anwendungsbeispiel 2

Die herbizide Wirkung der Formulierung aus Beispiel 4 und einer kommerziellen Pelargonsäureformulierung wurde an den in der Tabelle 6 angegebenen Unkräutern getestet.

**Tabelle 6**

| Formulierung/ Aufwandmenge ²⁾ | Beispiel 4 107 L/ha | | | Vergleichsformulierung 1 ¹) 166 L/h | | |
|---|---|---|---|---|---|---|
| Bewertungszeitpunkt (DAT) ³⁾ | 2 | 6 | 20 | 2 | 6 | 20 |
| Unkrautart | | | | | | |
| Hieracium pilosella | 100 | 96 | 86,25 | 100 | 95 | 65 |
| Erigeron canadensis | 100 | 100 | 88,75 | 100 | 96,25 | 85 |
| Filago arvensis | 75 | 75 | 41,25 | 75 | 75 | 63,75 |
| Sedum acre | 93,75 | 93,75 | 75 | 92,5 | 86,25 | 52,5 |
| Taraxacum officinale | 96,25 | 88,75 | 53,75 | 91,25 | 90 | 45 |
| Rhytidiadelphus squarrosus | 98,75 | 72,50 | 53,75 | 100 | 70 | 32,50 |
| Bryophyta | 100 | 100 | 98,75 | 100 | 100 | 100 |

| | | | | | | |
|---|---|---|---|---|---|---|
| ¹) Handelsübliche Pelargonsäureformulierung: Finalsan Unkrautfrei, W. Neudorff GmbH KG, Pelargonsäure 186,7 g/L Pelargonsäure ²⁾ Aufwandmenge an Formulierung ³⁾ Tage nach Behandlung | | | | | | |

### Anwendungsbeispiel 3

Die herbizide Wirkung der Formulierung aus Beispiel 2 und einer kommerziellen Pelargonsäureformulierung wurde an den in den Tabellen 7, 8, 9, 10 und 11 angegebenen Unkräutern getestet.

**Tabelle 7**

| Formulierung | Beispiel 2 | | | | Vergleichsformulierung 1 ¹) | | | |
|---|---|---|---|---|---|---|---|---|
| Aufwandmenge 2) | 130 L/ha | | | | 166 L/ha | | | |
| Bewertungszeitpunkt (DAT) 3) | 3 | 11 | 30 | 50 | 3 | 11 | 30 | 50 |
| Anthriscus sylvestris | 30,0 | 30,0 | 25,0 | 25,0 | 30,0 | 30,0 | 22,5 | 22,5 |
| Carduus acanthoides | 92,5 | 96,5 | 90,0 | 90,0 | 93,7 | 97,0 | 90,0 | 90,0 |
| Dactylis glomerata | 99,0 | 99,0 | 99,0 | 99,0 | 99,0 | 99,0 | 99,0 | 99,0 |
| Hypnum cupressiforme | 99,0 | 99,0 | 99,0 | 99,0 | 99,0 | 99,0 | 99,0 | 99,0 |
| Melilotus alba | 99,0 | 99,0 | 90,0 | 90,0 | 99,0 | 99,0 | 90,0 | 90,0 |
| Poa pratensis | 99,0 | 99,0 | 99,0 | 99,0 | 99,0 | 99,0 | 99,0 | 99,0 |
| Trigonella monspeliaca | 99,0 | 99,0 | 94,0 | 94,0 | 99,0 | 99,0 | 92,0 | 92,0 |
| Vicia villosa | 99,0 | 99,0 | 99,0 | 99,0 | 99,0 | 99,0 | 99,0 | 99,0 |

| | | | | | | | | |
|---|---|---|---|---|---|---|---|---|
| ¹) Handelsübliche Pelargonsäureformulierung: Finalsan Unkrautfrei, W. Neudorff GmbH KG, Pelargonsäure 186,7 g/L ²) Aufwandmenge an Formulierung ³) Tage nach Behandlung | | | | | | | | |

**Tabelle 8**

| Formulierung | Beispiel 2 | | | | Vergleichsformulierung 1 ¹) | | | |
|---|---|---|---|---|---|---|---|---|
| Aufwandmenge 2) | 130 L/ha | | | | 166 L/ha | | | |
| Bevvertungszeitpunkt (DAT) 3) | 3 | 10 | 25 | 45 | 3 | 10 | 25 | 45 |
| Achillea millefolium | 95,0 | 99,0 | 99,0 | 99,0 | 96,5 | 99,0 | 99,0 | 99,0 |
| Funaria hygrometrica | 93,0 | 96,3 | 99,0 | 99,0 | 95,0 | 99,0 | 99,0 | 99,0 |
| Taraxacum officinale | 95,0 | 97,3 | 97,8 | 98,5 | 96,3 | 99,0 | 99,0 | 99,0 |
| Urtica dioica | 95,0 | 99,0 | 99,0 | 99,0 | 96,0 | 99,0 | 99,0 | 99,0 |

| | | | | | | | | |
|---|---|---|---|---|---|---|---|---|
| ¹) Handelsübliche Pelargonsäureformulierung: Finalsan Unkrautfrei, W. Neudorff GmbH KG, Pelargonsäure 186,7 g/L ²⁾ Aufwandmenge an Formulierung ³⁾ Tage nach Behandlung | | | | | | | | |

**Tabelle 9**

| Formulierung | Beispiel 2 | | | | Vergleichsformulierung 1 ¹) | | | |
|---|---|---|---|---|---|---|---|---|
| Aufwandmenge 2) | 130 L/ha | | | | 166 L/ha | | | |
| Bewertungszeitpunkt (DAT) 3) | 3 | 10 | 22 | 44 | 3 | 10 | 22 | 44 |
| Elytrigia repens | 32,5 | 78,8 | 78,8 | 67,5 | 8,8 | 78,8 | 81,3 | 93,8 |
| Sonchus arvensis | 80,0 | 80,0 | 72,5 | 66,3 | 5,0 | 98,8 | 98,8 | 99,5 |

| | | | | | | | | |
|---|---|---|---|---|---|---|---|---|
| ¹) Handelsübliche Glufosinat-Formulierung: Finale, Bayer Cropscience S.L, Ammoniumglufosinat 15 Gew.-% ²⁾ Aufwandmenge an Formulierung ³⁾ Tage nach Behandlung | | | | | | | | |

**Tabelle10**

| Formulierung | Beispiel 2 | | | Vergleichsformulierung 1 ¹) | | |
|---|---|---|---|---|---|---|
| Aufwandmenge 2) | 130 L/ha | | | 166 L/ha | | |
| Bewertungszeitpunkt (DAT) 3) | 2 | 9 | 28 | 3 | 9 | 28 |
| Funaria hygrometrica | 71,3 | 82,5 | 80,0 | 63,8 | 75,0 | 81,3 |
| Poa annua | 62,5 | 70,0 | 80,0 | 42,5 | 62,5 | 71,3 |
| Fallopia convolvulvus | 63,8 | 75,0 | 80,0 | 67,5 | 70,0 | 75,0 |
| Senecio vulgaris | 47,5 | 67,5 | 72,5 | 37,5 | 61,5 | 65,0 |

| | | | | | | |
|---|---|---|---|---|---|---|
| ¹) Handelsübliche Pelargonsäureformulierung: Finalsan Unkrautfrei, W. Neudorff GmbH KG, Pelargonsäure 186,7 g/L ²⁾ Aufwandmenge an Formulierung ³⁾ Tage nach Behandlung | | | | | | |

**Tabelle 11**

| Formulierung | Beispiel 2 | | | | Vergleichsformulierung 1 ¹) | | | |
|---|---|---|---|---|---|---|---|---|
| Aufwandmenge 2) | 90 L/ha (gießen) | | | | 166 L/ha (gießen) | | | |
| Bewertungszeitpunkt (DAT) 3) | 10 | 14 | 23 | 42 | 10 | 14 | 23 | 42 |
| Hieracium pilosella | 72,5 | 77,5 | 53,8 | 35,0 | 47,5 | 62,5 | 37,5 | 20,0 |
| Rhytidiadelphus squarrosus | 77,0 | 83,3 | 87,8 | 93,3 | 66,3 | 77,0 | 84,3 | 88,8 |

| | | | | | | | | |
|---|---|---|---|---|---|---|---|---|
| ¹) Handelsübliche Pelargonsäureformulierung: Bayer Garten, Rasen Moosfrei, Pelargonsäure 186,7 g/L ²⁾ Aufwandmenge an Formulierung ³⁾ Tage nach Behandlung | | | | | | | | |

## Patentansprüche

1. Herbizide Pelargonsäure-Formulierung in Form einer Öl-in-Wasser-Emulsion, enthaltend:
a) Pelargonsäure oder ein Gemisch aliphatischer C₆-C₁₀-Carbonsäuren mit einem Pelargonsäureanteil von wenigstens 80 Gew.-%, bezogen auf das Gesamtgewicht des Gemischs, als Komponente A;
b) wenigstens ein organisches Lösungsmittel als Komponente B, das unter Standardbedingungen eine Wasserlöslichkeit unterhalb 1 g/l und bei Standarddruck einen Siedepunkt oberhalb 130 °C aufweist, ausgewählt unter C₁-C₁₆-Alkyl-C₆-C₂₂-alkancarbonsäureestern, C₃-C₁₀-Alkandicarbonsäuredi-C₁-C₁₆-dialkylestern und deren Gemischen;
c) wenigstens eine oberflächenaktive Substanz oder ein Salz davon als Komponente C, die ausgewählt ist unter Verbindungen der Formel I 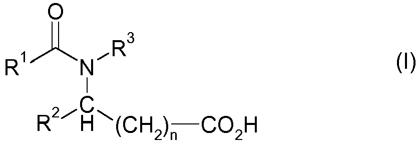 worin
n für 0 oder 1 steht,
R¹ für einen linearen oder verzweigten C₆-C₂₂-Alkylrest oder einen linearen oder verzweigten C₆-C₂₂-Alkenylrest steht und
R² und R³ unabhängig voneinander für Wasserstoff oder eine C₁-C₄-Alkylgruppe stehen;
d) wenigstens ein nichtionisches Tensid als Komponente D, das ausgewählt ist unter Substanzen, die wenigstens eine Poly-C₂-C₄-oxyalkylen-Gruppe aufweisen;
e) wenigstens eine Aminosäure als Komponente E mit einem isoelektrischen Punkt im Bereich von 5 bis 7 und
f) Wasser.

2. Formulierung nach Anspruch 1, wobei die Formulierung einen pH-Wert von 3 bis 5,5 aufweist.

3. Formulierung nach einem der vorhergehenden Ansprüche, worin das Gewichtsverhältnis von Komponente B zu Komponente A im Bereich von 1:1 bis 1:6 liegt.

4. Formulierung nach einem der vorhergehenden Ansprüche, worin die Komponente B als Komponente B1 wenigstens einen C₆-C₁₂-Alkyl-C₁₀-C₂₂-alkancarbonsäureester umfasst.

5. Formulierung nach Anspruch 4, worin die Komponente B als Komponente B2 zusätzlich wenigstens einen C₁-C₄-Alkyl-C₆-C₁₈-alkancarbonsäureester umfasst.

6. Formulierung nach einem der vorhergehenden Ansprüche, worin die Komponente C als Komponente C1 wenigstens eine Verbindung der Formel I oder ein Salz davon umfasst, worin R¹ für C₁₃-C₂₂-Alkyl oder C₁₃-C₂₂-Alkenyl, R² für Wasserstoff und R³ für Methyl stehen.

7. Formulierung nach Anspruch 6, worin die Komponente C als Komponente C2 zusätzlich wenigstens eine Verbindung der Formel I oder ein Salz davon umfasst, worin R¹ für C₆-C₁₂-Alkyl oder C₆-C₁₂-Alkenyl, R² für Wasserstoff und R³ für Methyl stehen.

8. Formulierung nach einem der Ansprüche 1 bis 5, worin die Komponente C ausgewählt ist unter Verbindungen der Formel I und deren Salzen, worin R¹ für C₆-C₁₂-Alkyl oder C₆-C₁₂-Alkenyl, R² für Wasserstoff und R³ für Methyl stehen.

9. Formulierung nach einem der vorhergehenden Ansprüche, worin die Komponente D ausgewählt ist unter ethoxyliertem Lanolin, Poly-C₂-C₄-oxyalkylen-C₁₀-C₂₀-alkylethern, ethoxylierten Mono-, Di- und Triglyceriden von aliphatischen C₈-C₂₂-Hydroxycarbonsäuren, und deren Gemischen.

10. Formulierung nach einem der vorhergehenden Ansprüche, worin die Komponente E ausgewählt ist unter Glycin, Alanin, Valin, Leucin, Isoleucin, Prolin, Threonin und Serin.

11. Formulierung nach einem der vorhergehenden Ansprüche, enthaltend, bezogen auf das Gesamtgewicht der von Wasser verschiedenen Bestandteile:
a) 30 bis 60 Gew.-% der Komponente A;
b) 10 bis 30 Gew.-% der Komponente B;
c) 1 bis 20 Gew.-% der Komponente C;
d) 5 bis 25 Gew.-% der Komponente D und
e) 3 bis 20 Gew.-% der Komponente E.

12. Formulierung nach einem der vorhergehenden Ansprüche, enthaltend, bezogen auf das Gesamtgewicht der von Wasser verschiedenen Bestandteile:
a) 30 bis 60 Gew.-% der Komponente A;
b) 10 bis 30 Gew.-% der Komponente B, umfassend wenigstens einen C₆-C₁₂-Alkyl-C₁₀-C₂₂-alkancarbonsäureester und zusätzlich wenigstens einen C₁-C₄-Alkyl-C₆-C₁₈-alkancarbonsäureester;
c) 1 bis 20 Gew.-% der Komponente C, umfassend wenigstens eine Verbindung der Formel I, worin R¹ für C₁₃-C₂₂-Alkyl oder C₁₃-C₂₂-Alkenyl, R² für Wasserstoff und R³ für Methyl stehen, oder ein Salz davon;
d) 5 bis 25 Gew.-% der Komponente D, die ethoxyliertes Lanolin und wenigstens einen Poly-C₂-C₄-oxyalkylen-C₁₀-C₂₀-alkylether umfasst;
e) 3 bis 20 Gew.-% der Komponente E.

13. Formulierung nach einem der Ansprüche 1 bis 11, enthaltend, bezogen auf das Gesamtgewicht der von Wasser verschiedenen Bestandteile:
a) 30 bis 60 Gew.-% der Komponente A;
b) 10 bis 30 Gew.-% der Komponente B, umfassend wenigstens einen C₆-C₁₂-Alkyl-C₁₀-C₂₂-alkancarbonsäureester und zusätzlich wenigstens einen C₁-C₄-Alkyl-C₆-C₁₈-alkancarbonsäureester;
c) 1 bis 20 Gew.-% der Komponente C, umfassend wenigstens eine Verbindung der Formel I, worin R¹ für C₆-C₁₂-Alkyl oder C₆-C₁₂-Alkenyl, R² für Wasserstoff und R³ für Methyl stehen, deren Salz und Gemischen davon;
d) 5 bis 25 Gew.-% der Komponente D, die ethoxyliertes Lanolin und wenigstens einen Poly-C₂-C₄-oxyalkylen-C₁₀-C₂₀-alkylether umfasst;
e) 3 bis 20 Gew.-% der Komponente E.

14. Formulierung nach einem der vorhergehenden Ansprüche, umfassend als weitere Komponente G wenigstens ein Alkylpolyglukosid.

15. Formulierung nach einem der vorhergehenden Ansprüche in Form eines Konzentrats, enthaltend die Komponente A in einer Menge von 15 bis 50 Gew.-%, bezogen auf das Gesamtgewicht der Formulierung.

16. Formulierung nach einem der vorhergehenden Ansprüche in einer für die Applikation geeigneten Form, enthaltend die Komponente A in einer Menge von 0,1 bis 5 Gew.-%, bezogen auf das Gesamtgewicht der Formulierung.

17. Formulierung nach einem der vorhergehenden Ansprüche, enthaltend im Wesentlichen keine von der Komponente A verschiedenen herbiziden Wirkstoffe.

18. Verwendung einer Formulierung nach einem der vorhergehenden Ansprüche zur Bekämpfung von unerwünschtem Pflanzenwuchs.

## Claims

1. A herbicidal pelargonic acid formulation in the form of an oil-in-water emulsion, comprising:
a) pelargonic acid or a mixture of aliphatic C₆-C₁₀-carboxylic acids with a pelargonic acid content of at least 80% by weight, based on the total weight of the mixture, as component A;
b) at least one organic solvent as component B, which under standard conditions has a water solubility of below 1 g/l and a boiling point at standard pressure of above 130°C, selected from C₁-C₁₆-alkyl-C₆-C₂₂-alkanecarboxylic acid ester, di-C₁-C₁₆-dialkyl C₃-C₁₀-alkanedicarboxylic acid ester and mixtures thereof;
c) at least one surface-active substance or a salt thereof as component C, which is selected from compounds of formula I 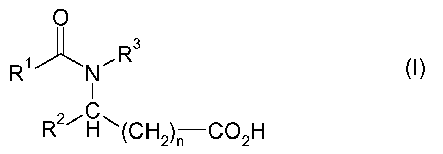 wherein
n stands for 0 or 1,
R¹ stands for a linear or branched C₆-C₂₂-alkyl radical or a linear or branched C₆-C₂₂-alkenyl radical and
R² and R³, independently of one another, stand for hydrogen or a C₁-C₄-alkyl group;
d) at least one nonionic surfactant as component D, which is selected from substances having at least one poly-C₂-C₄-oxyalkylene group;
e) at least one amino acid as component E, with an isoelectric point in the range of from 5 to 7 and
f) water.

2. The formulation according to claim 1, where the formulation has a pH value of from 3 to 5.5.

3. The formulation according to any of the preceding claims, where the weight-ratio of component B to component A is in the range of from 1:1 to 1:6.

4. The formulation according to any of the preceding claims, where component B comprises, as component B1, at least one C₆-C₁₂-alkyl-C₁₀-C₂₂-alkanecarboxylic acid ester.

5. The formulation according to claim 4, where component B comprises, as component B2, in addition at least one C₁-C₄-alkyl-C₆-C₁₈-alkanecarboxylic acid ester.

6. The formulation according to any of the preceding claims, where component C comprises, as component C1, at least one compound of formula I or a salt thereof, wherein R¹ stands for C₁₃-C₂₂-alkyl or C₁₃-C₂₂-alkenyl, R² stands for hydrogen and R³ stands for methyl.

7. The formulation according to claim 6, where component C comprises, as component C2, in addition at least one compound of formula I or a salt thereof, wherein R¹ stands for C₆-C₁₂-alkyl or C₆-C₁₂-alkenyl, R² stands for hydrogen and R³ stands for methyl.

8. The formulation according to any of claims 1 to 5, where component C is selected from compounds of formula I and the salts thereof, wherein R¹ stands for C₆-C₁₂-alkyl or C₆-C₁₂-alkenyl, R² stands for hydrogen and R³ stands for methyl.

9. The formulation according to any of the preceding claims, where component D is selected from ethoxylated lanolin, poly-C₂-C₄-oxyalkylene-C₁₀-C₂₀-alkyl ethers, ethoxylated mono-, di- and triglycerides of aliphatic C₈-C₂₂-hydroxycarboxylic acids, and the mixtures thereof.

10. The formulation according to any of the preceding claims, where component E is selected from glycine, alanine, valine, leucine, isoleucine, proline, threonine and serine.

11. The formulation according to any of the preceding claim, comprising, based on the total weight of the constituents other than water:
a) 30 to 60% by weight of component A;
b) 10 to 30% by weight of component B;
c) 1 to 20% by weight of component C;
d) 5 to 25% by weight of component D and
e) 3 to 20% by weight of component E.

12. The formulation according to any of the preceding claim, comprising, based on the total weight of the constituents other that water:
a) 30 to 60% by weight of component A;
b) 10 to 30% by weight of component B, comprising at least one C₆-C₁₂-alkyl-C₁₀-C₂₂-alkanecarboxylic acid ester and in addition at least one C₁-C₄-alkyl-C₆-C₁₈-alkanecarboxylic acid ester;
c) 1 to 20% by weight of component C, comprising at least one compound of formula I, wherein R¹ stands for C₁₃-C₂₂-alkyl or C₁₃-C₂₂-alkenyl, R² stands for hydrogen and R³ stand for methyl, or a salt thereof;
d) 5 to 25% by weight of component D, comprising ethoxylated lanolin and at least one poly-C₂-C₄-oxyalkylene-C₁₀-C₂₀-alkyl ether;
e) 3 to 20% by weight of component E.

13. The formulation according to any of the claims 1 to 11, comprising, based on the total weight of the constituents other than water:
a) 30 to 60% by weight of component A;
b) 10 to 30% by weight of component B, comprising at least one C₆-C₁₂-alkyl-C₁₀-C₂₂-alkanecarboxylic acid ester and additionally at least one C₁-C₄-alkyl-C₆-C₁₈-alkanecarboxylic acid ester;
c) 1 to 20% by weight of component C, comprising at least one compound of formula I, wherein R¹ stands for C₆-C₁₂-alkyl or C₆-C₁₂-alkenyl, R² stands for hydrogen and R³ stand for methyl, the salt thereof and the mixtures thereof;
d) 5 to 25% by weight of component D, comprising ethoxylated lanolin and at least one poly-C₂-C₄-oxyalkylene-C₁₀-C₂₀-alkyl ether;
e) 3 to 20% by weight of component E.

14. The formulation according to any of the preceding claims, comprising, as further component G, at least one alkylpolyglucoside.

15. The formulation according to any of the preceding claims in the form of a concentrate, comprising component A in an amount of from 15 to 50% by weight, based on the total weight of the formulation.

16. The formulation according to any of the preceding claims in a form which is suitable for application, comprising component A in an amount of from 0.1 to 5% by weight, based on the total weight of the formulation.

17. The formulation according to any of the preceding claims, comprising essentially no herbicidal active substances other than component A.

18. Use of a formulation according to any of the preceding claims for controlling undesired plant growth.

## Revendications

1. Formulation herbicide d'acide pélargonique sous la forme d'une émulsion huile dans eau, contenant :
a) de l'acide pélargonique ou un mélange d'acides carboxyliques en C₆-C₁₀ aliphatiques contenant une proportion d'acide pélargonique d'au moins 80 % en poids, par rapport au poids total du mélange, en tant que composant A ;
b) au moins un solvant organique en tant que composant B, qui présente en conditions standards une solubilité dans l'eau inférieure à 1 g/l et à pression standard un point d'ébullition supérieur à 130 °C, choisi parmi les esters d'acides alkyle en C₁-C₁₆-alcane en C₆-C₂₂-carboxylique, les esters dialkyliques en C₁-C₁₆ d'acides alcane en C₃-C₁₀-dicarboxyliques et leurs mélanges ;
c) au moins une substance tensioactive ou un sel de celle-ci en tant que composant C, qui est choisie parmi les composés de formule I 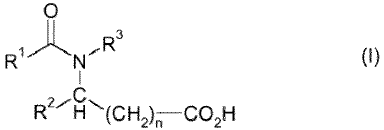 dans laquelle
n représente 0 ou 1,
R¹ représente un radical alkyle en C₆-C₂₂ linéaire ou ramifié ou un radical alcényle en C₆-C₂₂ linéaire ou ramifié, et
R² et R³ représentent indépendamment l'un de l'autre l'hydrogène ou un groupe alkyle en C₁-C₄;
d) au moins un tensioactif non ionique en tant que composant D, qui est choisi parmi les substances comprenant au moins un groupe poly-oxyalkylène en C₂-C₄;
e) au moins un acide aminé en tant que composant E, ayant un point isoélectrique dans la plage allant de 5 à 7, et
f) de l'eau.

2. Formulation selon la revendication 1, dans laquelle la formulation présente un pH de 3 à 5,5.

3. Formulation selon l'une quelconque des revendications précédentes, dans laquelle le rapport en poids entre le composant B et le composant A se situe dans la plage allant de 1:1 à 1:6.

4. Formulation selon l'une quelconque des revendications précédentes, dans laquelle le composant B comprend en tant que composant B1 au moins un ester d'acide alkyle en C₆-C₁₂-alcane en C₁₀-C₂₂-carboxylique.

5. Formulation selon la revendication 4, dans laquelle le composant B comprend en tant que composant B2 en outre au moins un ester d'acide alkyle en C₁-C₄-alcane en C₆-C₁₀-carboxylique.

6. Formulation selon l'une quelconque des revendications précédentes, dans laquelle le composant C comprend en tant que composant C1 au moins un composé de formule I ou un sel de celui-ci, R¹ représentant alkyle en C₁₃-C₂₂ ou alcényle en C₁₃-C₂₂, R² représentant hydrogène et R³ représentant méthyle.

7. Formulation selon la revendication 6, dans laquelle le composant C comprend en tant que composant C2 en outre au moins un composé de formule I ou un sel de celui-ci, R¹ représentant alkyle en C₆-C₁₂ ou alcényle en C₆-C₁₂, R² représentant hydrogène et R³ représentant méthyle.

8. Formulation selon l'une quelconque des revendications 1 à 5, dans laquelle le composant C est choisi parmi les composés de formule I et leurs sels, R¹ représentant alkyle en C₆-C₁₂ ou alcényle en C₆-C₁₂, R² représentant hydrogène et R³ représentant méthyle.

9. Formulation selon l'une quelconque des revendications précédentes, dans laquelle le composant D est choisi parmi la lanoline éthoxylée, les éthers alkyliques en C₁₀-C₂₀ de poly-oxyalkylène en C₂-C₄, les mono-, di- et triglycérides éthoxylés d'acides hydroxycarboxyliques en C₈-C₂₂ aliphatiques et leurs mélanges.

10. Formulation selon l'une quelconque des revendications précédentes, dans laquelle le composant E est choisi parmi la glycine, l'alanine, la valine, la leucine, l'isoleucine, la proline, la thréonine et la sérine.

11. Formulation selon l'une quelconque des revendications précédentes, contenant, par rapport au poids total des constituants différents de l'eau :
a) 30 à 60 % en poids du composant A ;
b) 10 à 30 % en poids du composant B ;
c) 1 à 20 % en poids du composant C ;
d) 5 à 25 % en poids du composant D et
e) 3 à 20 % en poids du composant E.

12. Formulation selon l'une quelconque des revendications précédentes, contenant, par rapport au poids total des constituants différents de l'eau :
a) 30 à 60 % en poids du composant A ;
b) 10 à 30 % en poids du composant B, comprenant au moins un ester d'acide alkyle en C₆-C₁₂-alcane en C₁₀-C₂₂-carboxylique et en outre au moins un ester d'acide alkyle en C₁-C₄-alcane en C₆-C₁₈-carboxylique ;
c) 1 à 20 % en poids du composant C, comprenant au moins un composé de formule I, dans laquelle R¹ représente alkyle en C₁₃-C₂₂ ou alcényle en C₁₃-C₂₂, R² représente hydrogène et R³ représente méthyle, ou un sel de celui-ci ;
d) 5 à 25 % en poids du composant D, qui comprend de la lanoline éthoxylée et au moins un éther alkylique en C₁₀-C₂₀ de poly-oxyalkylène en C₂-C₄ ;
e) 3 à 20 % en poids du composant E.

13. Formulation selon l'une quelconque des revendications 1 à 11, contenant, par rapport au poids total des constituants différents de l'eau :
a) 30 à 60 % en poids du composant A ;
b) 10 à 30 % en poids du composant B, comprenant au moins un ester d'acide alkyle en C₆-C₁₂-alcane en C₁₀-C₂₂-carboxylique et en outre au moins un ester d'acide alkyle en C₁-C₄-alcane en C₆-C₁₀-carboxylique ;
c) 1 à 20 % en poids du composant C, comprenant au moins un composé de formule I, dans laquelle R¹ représente alkyle en C₆-C₁₂ ou alcényle en C₆-C₁₂, R² représente hydrogène et R³ représente méthyle, son sel et leurs mélanges ;
d) 5 à 25 % en poids du composant D, qui comprend de la lanoline éthoxylée et au moins un éther alkylique en C₁₀-C₂₀ de poly-oxyalkylène en C₂-C₄ ;
e) 3 à 20 % en poids du composant E.

14. Formulation selon l'une quelconque des revendications précédentes, comprenant au moins un alkylpolyglucoside en tant que composant G supplémentaire.

15. Formulation selon l'une quelconque des revendications précédentes, sous la forme d'un concentré, contenant le composant A en une quantité de 15 à 50 % en poids, par rapport au poids total de la formulation.

16. Formulation selon l'une quelconque des revendications précédentes, sous une forme appropriée pour l'application, contenant le composant A en une quantité de 0,1 à 5 % en poids, par rapport au poids total de la formulation.

17. Formulation selon l'une quelconque des revendications précédentes, ne contenant essentiellement pas d'agents actifs herbicides différents du composant A.

18. Utilisation d'une formulation selon l'une quelconque des revendications précédentes pour lutter contre la végétation indésirable.
